# EUROPEAN PATENT APPLICATION

(11) **EP 4 528 229 A1**
(43) Date of publication of application: **26.03.2025**
(21) Application number: 23306549.9
(22) Date of filing: 19.09.2023
(51) Int. Cl.: G01D 5/353, G01H 9/00, G01M 11/00

(54) **OPTICAL INTERROGATOR FOR DISTRIBUTED OPTICAL SENSING TO SMOOTHLY CHANGE WAVELENGTH CHANNEL OF OPTICAL PROBE SIGNALS IN TIME**

(71) Applicant: Alcatel Submarine Networks, 91620 Nozay (FR)
(72) Inventor: RONNEKLEIV, Erlend, 7052 Trondheim (NO); BRENNE, Jan Kristoffer, 7048 Trondheim (NO); KLIMENTOV, Dmitry, 7224 Melhus (NO); TOLSTIK, Nikolai, 7071 Trondheim (NO); SORGARD, Trygve, 7075 Tiller (NO)
(74) Representative: Loyer & Abello

(57) **Abstract**

An optical interrogator for a distributed fiber optic sensor includes an optical transmitter and an optical receiver. The optical transmitter is configured to transmit optical probe signals at a temporal series of corresponding start times, such that center wavelengths of different ones of the optical probe signals transmitted within a repeat period are different. The optical receiver is configured to receive back scattered light from the optical probe signals and to obtain sensing information therefrom. In some implementation, the optical transmitter may increase the center wavelength of the transmission over one part of a transmission repeat period, and decrease it over another part of the transmission repeat period.

## Description

### TECHNICAL FIELD

The present disclosure relates to distributed optical fiber sensing and apparatus for use therein.

### BACKGROUND

Optical fibers can be used as distributed sensors. In a typical implementation, an optical interrogating device sends a sequence of suitably prepared probe optical pulses to an optical fiber, and measures parts of the optical pulses that are returned back to the interrogator by reflectors distributed along the optical fiber. The reflectors are typically either approximately randomly formed during fabrication of the optical fiber (e.g. causing Raleigh scattering) or are intentionally formed therein (e.g. fiber Bragg gratins, "FBGs"). Applications of such sensors include but are not limited to detection and/or mapping of ambient disturbances, such as naturally occurring or man-induced mechanical vibrations, temperature and/or pressure variations, etc., both in marine and terrestrial environments. Example marine applications relate to monitoring of submarine power and telecom cables. European patent application EP4160941, entitled "Distributed Sensing and Monitoring Using Amplified Optical Links", describes distributed sensing along an amplified multi-span optical fiber link with wavelength-selective optical loopback paths in the optical repeaters thereof.

### SUMMARY OF SOME SPECIFIC EMBODIMENTS

An aspect of the present disclosure provides an apparatus comprising an interrogator for a distributed fiber optic sensor. The interrogator comprises an optical transmitter and an optical receiver. The optical transmitter is configured to transmit optical probe signals at a series of start times and with a repeat period. The optical transmitter is configured to transmit the optical probe signals in at least 5 non-overlapping wavelength channels, the optical probe signals of the repeat period having corresponding center wavelengths, different ones of the optical probe signals of the repeat period being transmitted in different ones of the wavelength channels. The optical receiver is configured to receive back scattered light from the optical probe signals and to obtain sensing information therefrom. The optical transmitter is further configured to transmit such that, during at least a ¼ of the repeat period, each transition between transmitting the optical probe signals with consecutive ones of the start times includes switching the one of the center wavelengths being transmitted to a longer one of the center wavelengths and such that, during at least another ¼ of the repeat period, each transition between transmitting the optical probe signals with consecutive ones of the start times includes switching the one of the center wavelengths being transmitted to a shorter one of the center wavelengths.

An aspect of the present disclosure provides an apparatus comprising an optical interrogator for a distributed fiber optic sensor. The optical interrogator comprises an optical transmitter and an optical receiver. The optical transmitter is configured to transmit optical probe signals at a temporal series of corresponding start times into an amplified multi-segment optical fiber line over a set of spectrally separate wavelength channels, such that the optical probe signals transmitted at different start times of the temporal series are transmitted in different ones of the wavelength channels of the set. The optical probe signals transmitted at consecutive start times may partially overlap in time. The optical receiver is configured to receive back scattered light from the optical probe signals, and obtain sensing information therefrom.

### BRIEF DESCRIPTION OF THE DRAWINGS

Embodiments disclosed herein will be described in greater detail with reference to the accompanying drawings which represent example embodiments thereof, in which like elements are indicated with like reference numerals, and wherein:
FIG. 1 is a schematic partial block diagram of a distributed optical fiber sensor including an optical fiber interrogator and a multi-segment optical fiber line;
FIG. 2 is a schematic block diagram illustrating an example implementation of the distributed optical fiber sensor of FIG. 1 with separate sensor and relay optical fibers in the multi-segment optical fiber line;
FIGs. 3A-3C are schematic block diagrams illustrating example implementations of wavelength-selective add-couplers for collecting back-scattered light from the sensor optical fibers of the distributed optical fiber sensor of FIG. 5;
FIGs. 4A and 4B are graphs illustrating example time division schemes to separately interrogate several sensor optical fibers using different wavelength channels;
FIG. 5 is a schematic block diagram of an example multi-channel implementation of the optical fiber interrogator apparatus of FIG. 1 or FIG. 2;
FIG. 6 is a schematic block diagram of a single-channel interrogator that may be used in embodiments of the apparatus of FIG. 5;
FIG. 7A is a graph illustrating an example sequence of optical probe pulses of different wavelength channels that may be generated by the optical fiber interrogator of FIG. 1, FIG. 2, or FIG. 5 for interrogating a 16-segment optical fiber system;
FIG. 7B is a graph illustrating an example modulation of load light channels accompanying the sequence of optical probe pulses of FIG. 7A;
FIG. 8 is a schematic block diagram of an example apparatus for providing load light along with the probe light, which may be used in some embodiments of the distributed optical fiber sensor of FIG. 1 or FIG. 2;
FIG. 9A is a graph illustrating an example time-averaged optical spectrum of the load and probe light of FIGs. 7A and 7B at an output of an optical amplifier of an outbound optical fiber line of the 16-span optical fiber system;
FIG. 9B is a graph illustrating a time-averaged optical spectrum of the load and probe light of FIGs. 7A and 7B at an output of a return-path optical amplifier of the 16-span optical fiber in an example embodiment;
FIG. 10 is a graph illustrating temporal evolution of expected back-scattering response of the 16-span optical fiber system to the sequence of probe light pulses of FIG. 7A;
FIG. 11 is a schematic block diagram illustrating a part of an optical loop-back path of FIG. 2 with a load light bypass;
FIG. 12 is a graph illustrating an example sequence of partially-overlapping probe optical pulses of different wavelength channels that may be generated by the optical fiber interrogator of FIG. 1, FIG. 2, or FIG. 5 for interrogating a 16-span optical fiber system.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise.

The following abbreviations and acronyms may be used in the present document:
- "ASE": amplified spontaneous emission
- "ADC": analog to digital converter
- "AOM": acousto-optic modulator
- "CI": channel interrogator
- "DAC": digital to analog converter
- "DAS": distributed acoustic sensing
- "DOFS": distributed optical fiber sensing
- "EDFA": erbium doped fiber amplifier
- "FWM": four-wave mixing
- "OA": optical amplifier
- "OFA": optical fiber amplifier
- "OFI": optical fiber interrogator
- "OM": optical modulator
- "SOA": semiconductor optical modulator
- "OTDR": optical time domain reflectometer
- "SNR": signal-to-noise ratio
- "OSNR": optical signal-to-noise ratio
- "SPM": self-phase modulation
- "XPM": cross-phase modulation
- "XPoM": cross-polarization modulation

Example embodiments described below relate to an apparatus, and a corresponding method, for interrogating an amplified multi-segment optical fiber line. The amplified multi-segment optical fiber line typically includes a plurality of serially-linked optical amplifiers (OAs) and a plurality of optical fibers connected to the outputs of respective ones of the optical amplifiers. The optical amplifiers are typically optical fiber amplifiers (OFAs) using rare-earth doped optical fibers as active medium to provide optical gain, e.g., erbium-doped OF As. Semiconductor optical amplifiers (SOA) or Raman amplification along optical fiber links of the optical fiber line may also be used in some multi-segment optical fiber lines, additionally or in place of the OF As. Different ones of the optical fibers of the optical fiber line may be interrogated at different wavelengths using wavelength-selective optical loop-back paths. An optical interrogator used in such systems may be configured to transmit optical probe signals at a series of start times, each of the optical probe signals having a center wavelength and a spectral bandwidth. Optical probe signals transmitted at consecutive start times may be referred to herein as consecutive optical probe signals. The optical probe signals transmitted at consecutive ones of the start times have their center wavelengths within different non-overlapping wavelength channels. The wavelength channels are spaced by at least 10 times the bandwidth of each of the optical probe signals. The optical interrogator may be configured to transmit sets of the optical probe signals in consecutive repeat periods, each of the repeat periods including at least 5, or at least 8 in some embodiments, of the optical probe signals with consecutive ones of the start times. Different ones of the optical probe signals transmitted within each one of the repeat period are transmitted in different ones of the wavelength channels, i.e. have different ones of the center wavelengths. Herein, repeat period refers to a time interval for transmitting an optical probe signal to each of the non-overlapping wavelength channels used for optical probing. In some embodiments, the same set of optical probe signals may be transmitted in different ones of the repeat periods. In other embodiments, the set of optical probe signals transmitted in some different ones of the repeat periods may be shifted by a frequency in a range from about 2 MHz to up to 2 GHz.

In examples described below, the center wavelengths of the optical probe signals are approximately aligned with central wavelengths of the wavelength channels. In some embodiments, corresponding ones of the optical probe signals transmitted in different repeat periods may have slightly different center wavelengths within the bandwidth of a same one of the wavelength channels, in which case the center wavelength of an optical probe signal may be offset from the central wavelength of the wavelength channel thereof, with the offset being within the channel bandwidth. In some embodiments, the transmission start times of optical probe signals transmitted in different wavelength channels may be equally spaced in time within a transmission period. In some embodiments, the wavelength channels being transmitted increase in wavelength in one part of the transmission period, and decrease in wavelength in another, e.g. temporally-adjacent, part of the transmission period; each of these parts may be at least ¼ of the transmission period. In some embodiments, the optical probe signals transmitted at consecutive start times ("consecutive optical probe signals") partially overlap in time at transmission. In some embodiments, load light may be provided to the optical fiber line along with the optical probe signals to stabilize optical amplifiers of the optical fiber system being interrogated when optical power and/or wavelength of the optical probe signals vary in time

Various aspects of the apparatus, system, and method described herein may be useful for distributed optical sensing along relatively long optical fiber lines. The distributed optical fiber sensing operates by transmitting probe optical signals along the optical fiber line and analyzing back-scattered light, e.g. due to the Raleigh back-scattering on random imperfections in optical fibers or intentionally formed reflectors. Since light transmitted in long fibers is attenuated to levels that decrease exponentially with the fiber distance, and also because only a small portion of light propagating along an optical fiber typically gets back-scattered at any location in the fiber, extending the reach of a distributed optical sensing along an optical fiber line may require the use of multiple OAs, such as e.g. erbium-doped fiber amplifiers (EDFAs), located therealong.

E.g. an apparatus for extending the range of distributed optical fiber sensing (DOFS) described in the European patent application EP4160941 includes a multi-segment out-bound optical fiber line configured for optical sensing therealong, with the back-scattered response optical signal from each span being transmitted back to the apparatus over a return optical fiber line, each of the out-bound and return optical fiber lines including a sequence of OF As for extending the sensing reach of the system.

The use of OF As in a multi-span optical fiber system being interrogated may result in several complications. Some of these complications relate to the time dynamics of the OF As, e.g. EDFAs, which may respond to changes in the input optical signal by causing spikes and ripples in the transmitted light. Other potential complications relate to the low levels of the Rayleigh scattered response at the input of the return transmission line, causing a poor optical signal to noise ratio (OSNR) with the noise typically being the amplified spontaneous emission (ASE) at the receiver side after accumulation of the ASE from many return-path optical amplifiers.

Furthermore, there are limitations related to distortion of optical signals in both the out-bound and return optical fiber lines due to optical non-linearities, such as the Kerr non-linearity that causes an optical signal that travels through a fiber to acquire a power dependent optical phase. The non-linear phase shift of the optical signal that is caused by the signal itself is called self-phase modulation (SPM). The phase shift that is caused by optical signals at other frequencies is called cross-phase modulation (XPM). If the other, so-propagating optical signal is not polarized exactly parallel or orthogonal to the affected signal, the polarization of the probe signal will be modulated through so-called cross-polarization modulation (XPolM). The intensity beating between optical probe signals at three optical frequencies (of which two could be identical) will cause mixing products at various fourth frequencies that are sum-difference combination of the three mixing optical frequencies, with the corresponding effect being referred to as the four-wave mixing (FWM). Chromatic dispersion in the optical fiber may moderate the effects of Kerr nonlinearity, especially when the interacting frequencies are far apart. On the other hand, if the peak optical power within a channel becomes high, the interplay between the Kerr-induced modulation and the dispersion may distort the co-propagating signals severely, with the corresponding distortion referred to as modulation instability (MI).

The accumulation of non-linear distortion of interrogating optical signals may complicate optical sensing along an amplified multi-span optical line, in particular at distances farther away from a source of the interrogating light signal, limiting the sensing reach of the system.

An aspect of the present disclosure provides an apparatus for distributed optical sensing using a multi-span amplified optical fiber line, which may allow overcoming or at least mitigating one or more of the complications related to signal distortions in amplified multi-span optical fiber lines.

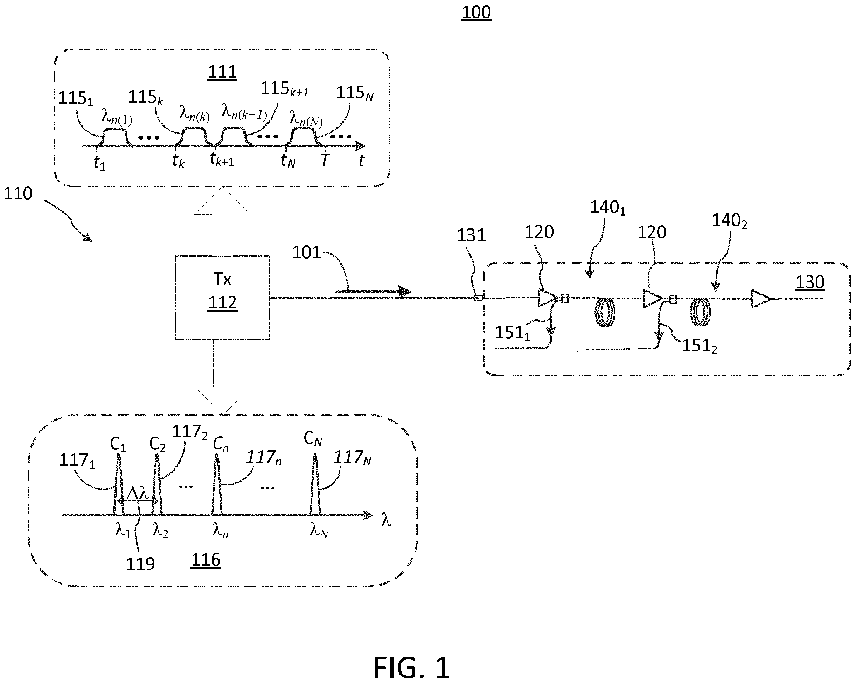

FIG. 1 shows a schematic partial block diagram of a distributed optical fiber sensing (DOFS) system 100 where one or more features of the present disclosure may be used. In some embodiments, the DOFS system 100 may be configured to perform distributed acoustic sensing (DAS) measurements, e.g., as known in the pertinent art. In some embodiments, the DOFS system 100 may additionally or alternatively be configured to perform OTDR measurements and/or interferometric measurements. In some embodiments, the DOFS system 100 may additionally or alternatively be configured to perform other types of DOFS, such as distributed temperature sensing (DTS), distributed strain sensing (DSS), and distributed temperature and strain sensing (DTSS).

The DOFS system 100 includes an optical fiber interrogator (OFI) 110 ("interrogator 110") comprising an optical transmitter (Tx) 112 that is connected to transmit probe light 101 into an input 131 of an optical fiber line 130. The OFI 110 may further include an optical receiver, which is not explicitly shown in FIG. 1. In some embodiments, the OFI 110 may be a part of an optical terminal that may further include one or more sources of load light, as described below. The optical fiber line 130 comprises a sequence of optical fiber segments 140₁, 140₂, ...., ("140ₙ") which may be generally referred to as optical fiber segments 140. The optical fiber line 130 is configured to cause optical amplification of the probe light 101 along and/or between the optical fiber segments 140, so as to compensate for optical loss along a travelled portion of the optical fiber line 130. In the illustrated example, consecutive ones of the optical fiber segments 140 are optically end-connected via a corresponding optical amplifier (OA) 120. The OAs 120 are typically rare-earth doped optical fiber amplifiers (OFAs), such as e.g. erbium-doped fiber amplifiers (EDFA). In some implementations, optical amplification along the optical fiber line 130 may be provided e.g. via the Raman effect (Raman amplifiers). In such implementations, the OAs 120 may represent sections of the optical fiber segments 140*ₙ* with positive net optical gain due to Raman amplification. In some implementations, the OAs 120 may include one or more SOAs.

The probe light 101 includes a temporally-ordered set 111 of *N* ≥ 5 optical probe signals 115₁, ..., 115*_{N}*, ... ("probe signals 115*ₙ*", top insert of FIG. 1) transmitted over a set 116 of *N* spectrally-separate wavelength channels 117*ₙ* with a repeat period *T*ᵣ. The optical probe signals 115*ₙ* of the set 111 have corresponding center wavelengths λ*ₙ*, *n* = 1, .., *N* (lower insert in FIG. 1). The center wavelength λ*ₙ* and the bandwidth *B*_{c} of an *n*-th optical probe signal 115*ₙ*, *n* = 1, .., *N,* may be determined, e.g. from an optical spectrum thereof, the center wavelength λ*ₙ* being in the middle of the spectral band of said optical probe signal. In the described example, the center wavelengths λ*ₙ* of the optical probe signals 115*ₙ* are approximately the central wavelengths of the corresponding wavelength channels 117*ₙ*. The wavelength channels 117*ₙ* may also be commonly referred to as the wavelength channels 117 or the probe channels 117.

The optical transmitter 112 is configured to transmit the set 111 of *N* optical probe signals 115*ₙ* over a transmission period *T* so that different optical probe signals 115*ₖ* that are transmitted at different transmission start times *tₖ* within the transmission period *T* have different central wavelengths λₙ, i.e. are transmitted in different ones of the wavelength channels 117*ₙ*. E.g. the optical probe signals 115*ₖ* and 115_{*k*+1}, which have consecutive transmission start times *tₖ* and *t*_{*k+*1}*,* are transmitted in spectrally-separate wavelength channels 117_{*n*(*k*)} (center wavelength *λₙ₍ₖ₎* ) and 117_{*n*(*k*)}, (center wavelengths *λ*_{*n*(*k+1*)} ≠ *λ*_{*n*(*k*)}), respectively. The transmission period *T* is approximately the time interval to transmit the optical probe signal set 111, from the start of the first optical probe signal 115₁ to (approximately) the end of the last optical probe signal 115*_{N}* of the set 111. In some embodiments the start times *tₖ* of the set 111 may be evenly spaced, with about a same delay time Δt between any two consecutive ones of the start times of the set; in such embodiments, *T ≅ N·Δt.* In the illustrated example each optical probe signal 115*ₖ* is an optical pulse; in some embodiments each optical probe signal 115*ₖ* may be two or more optical pulses transmitted one after another within a same wavelength channel 117*ₖ*.

The Tx 112 may be configured to repeatedly cycle through the *N* wavelength channels 117 with a repeat period *Tᵣ* ≥*T,* in each cycle transmitting the set 111 of *N* optical probe signals 115 over the transmission time period *T,* e.g. by transmitting in each wavelength channel 117 a periodic sequence of optical probe signals 115 with the repeat period *Tᵣ,* so that periodic sequences of optical probe signals 115 transmitted in different ones of the wavelength channels 117 are time-interleaved. Transmitting optical probe signals of different wavelength channels in a regular, time-interleaved fashion and/or with a controlled amount of wavelength shift at transitions between channels 117 may simplify managing transient behavior of the optical amplifiers 120 in the optical fiber line 130 being interrogated.

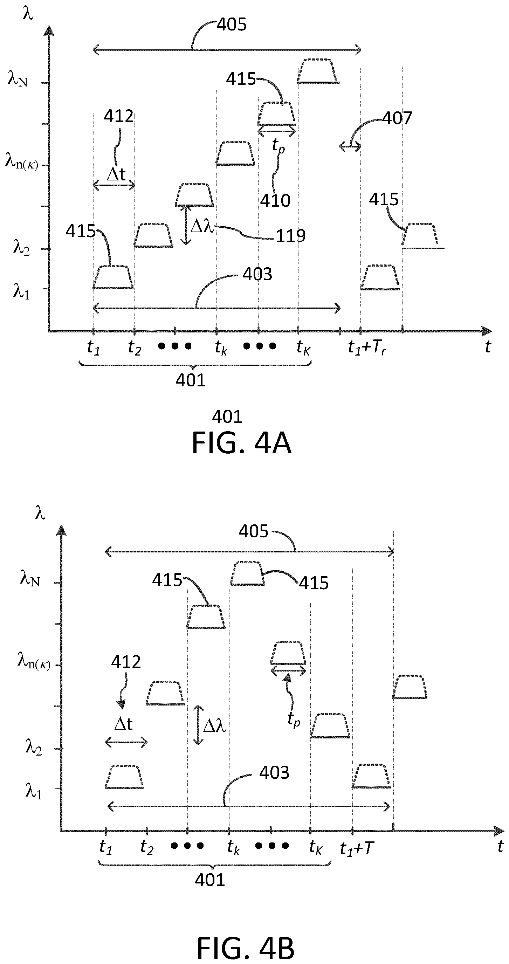

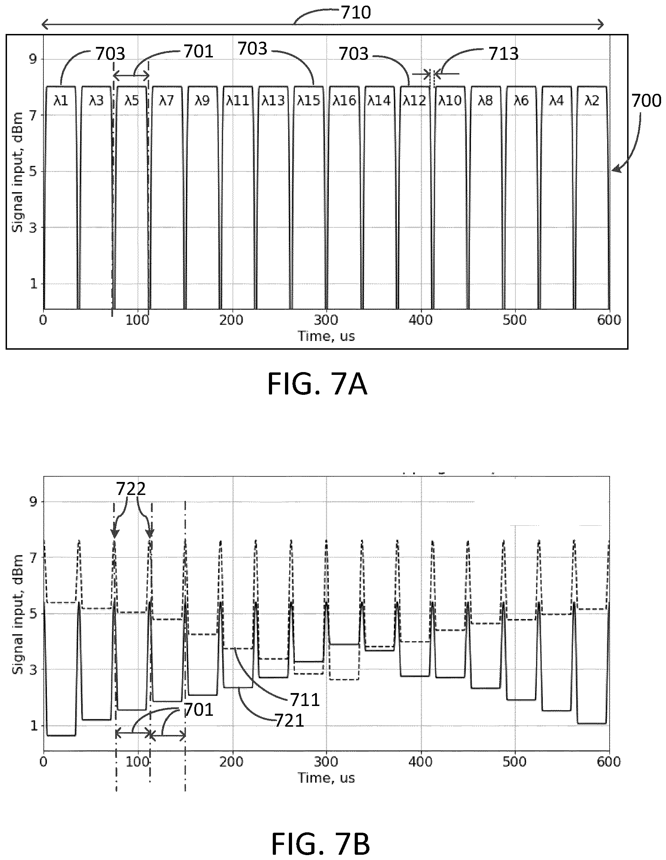

The Tx 112 may be configured to cycle through the wavelength channels 117 in different orders, e.g. as described below for specific examples with reference to FIGs. 4A, 4B, and 7A. In some embodiments, the Tx 112 may transmit the optical probe signals 115*ₖ* so that the wavelength of probe signal transmission monotonically changes in one direction, i.e. either increases or decreases with each subsequent optical probe signal 115*ₖ,* during the transmission period *T*. In some embodiments, the Tx 112 may transmit the optical probe signals 115*ₖ* so that the wavelength of probe signal transmission increases with each subsequent optical probe signal in one part of the transmission period *T*, and decreases in another part of the transmission period.

The center wavelengths λ*ₙ* of the optical probe signals in adjacent wavelength channels 117*ₙ* are spectrally separated by a wavelength spacing Δλ 119, which is approximately the wavelength spacing between the central wavelengths of the adjacent wavelength channels 117*ₙ*. A corresponding frequency spacing Δv ≅ *c*Δλ/λ*ₙ*² between adjacent channels 117, c being the speed of light in vacuum, exceeds the bandwidth *B*_{c} of the optical probe signals 115 being transmitted in each wavelength channel 117ₙ, typically by at least an order of magnitude. The frequency spacing Δν may be, e.g. in a range from 10 GHz to 500GHz, while the bandwidth *B*_{c} of the optical probe signals in each channel is less than 2 GHz, and typically in a range from 10 MHz to 200 MHz. Accordingly, light of different wavelength channels may be de-multiplexed at an optical receiver for separate sensing of environmental changes along the optical fibers 140*ₙ*. In some embodiments, optical frequencies *vₙ*= c/λₙ corresponding to the center wavelengths λₙ. may lie close to frequencies of a uniform, i.e. periodic, optical frequency grid. The optical frequencies *vₙ* may also lie on a non-uniform frequency grid or a flexible frequency grid. The frequency spacing Δ*v* between adjacent optical frequencies *vₙ* may somewhat vary from channel to channel, e.g. to avoid spectral overlap between FWM products and the probe signals in optical fibers downstream of the optical transmitter 112.

In the example illustrated in the top insert of FIG. 1, each of the optical probe signals 115*ₙ* is comprised of one optical probe pulse of a duration *tₚ.* In some embodiments the duration *tₚ* of each probe pulse may exceed 1 microsecond (µsec), e.g. be in a range from 5 to 100 µsec typically. In some embodiments, this optical pulse may be frequency-chirped. In some embodiments, this optical pulse may be suitably apodized. In some other embodiments, each of the optical probe signals 115, may comprise a sequence of two or more optical probe pulses, whose optical spectra may occupy somewhat different frequency ranges within a same one of the wavelength channels 117*ₙ*.

Sensing information about each of the optical fiber segments 141ₙ may be obtained by collecting and measuring light 151*ₙ* of a corresponding one of the wavelength channels 117ₙ back-scattered in said optical fiber segment 151*ₙ*. In some embodiments, the number *N* of wavelength channels 117 may be at least equal to the number of optical fiber segments 141 to be interrogated in the OF line 130; in this way, each of the optical fiber segments 141ₙ may be separately interrogated at a corresponding one of the wavelength channels 117ₙ using a *Tᵣ*-periodic sequence of the optical probe signals 115*ₙ* transmitted in said channel 117*ₙ*. In some embodiments, the optical probe signals 115*ₙ* of at least one of the wavelength channels 117*ₖ* may be used to interrogate two or more of the optical fiber segments 141*ₙ*. The repeat period *Tᵣ* may be suitably extended to avoid temporal overlaps at the receiver of light of a same optical probe signal back-scattered in different optical fibers.

In some embodiments, optical probe signals 115ₖ, 115ₖ₊₁ having consecutive transmission start times *t*ₖ, *t*ₖ₊₁ ("consecutive optical probe signals") do not overlap, i.e. the duration *tₚ* of each optical probe signals 115 is smaller than the time delay Δ*t*= |*tₖ* - *t*_{*k*+1}| between consecutively transmitted pulses 115. In some embodiments, each pair of consecutive optical probe signals 115ₖ, 115ₖ₊₁ within a repeat period 405 is separated in time by less than the gain relaxation time of the optical amplifiers in the optical fiber line to be interrogated, e.g. the OAs 120 or 220, and typically by less than about 10 microseconds (µsec), or about or less than 5 µsec (approximately the range of the gain relaxation time of a typical EDFA).

In some embodiments, optical probe signals 115 having consecutive transmission start times *tₖ* partially overlap, i.e. the duration *tₚ* of each optical probe signal 115 is somewhat greater than the time delay Δt between consecutively transmitted optical pulses 115. E.g., each of the optical probe signals 115ₖ may be a suitably apodized optical pulse, with the respective trailing and rising edges of two consecutively transmitted optical pulses overlapping at approximately 3dB levels to avoid dips in optical power of the probe light 101 between optical probe pulses 115 transmitted at consecutive ones of the start times *tₖ.*

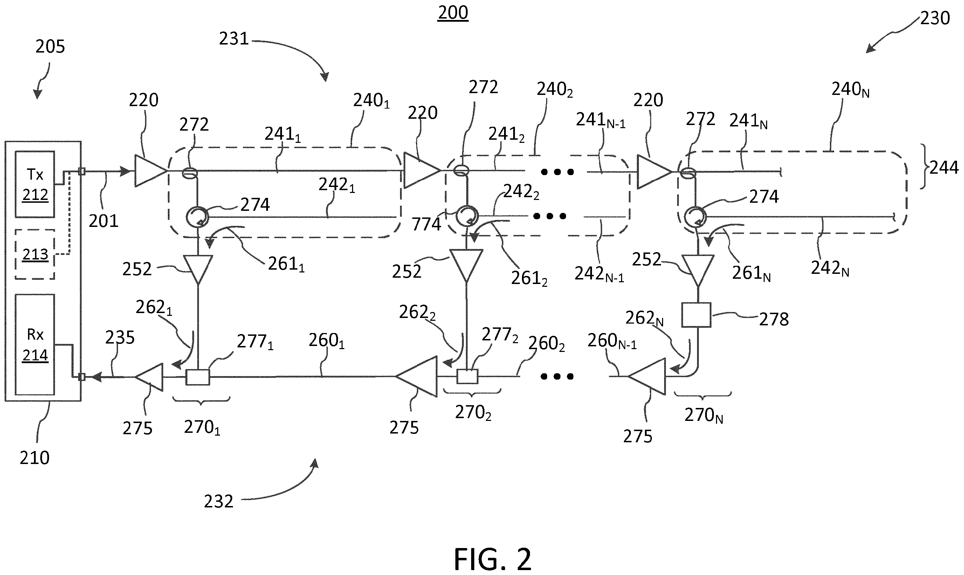

FIG. 2 illustrates an example implementation 200 of the DOSF system 100 of FIG. 1, which is referred to herein as a DOFS system 200 ("System 200"). System 200 includes an optical terminal 205 connected to an optical fiber (OF) system 230. The optical terminal 205 comprises an OFI 210 that includes an optical transmitter (Tx) 212 and an optical receiver (Rx) 214. The optical transmitter 212 may be embodiments of the optical transmitter 112 of FIG. 1. The OF system 230 includes an outbound optical fiber line ("OOF line") 231 and a return optical fiber line ("ROF line") 232. The OOF line 231 includes a sequence of *N* optical segments 240*ₙ*, *n* =1,..., *N*, which may be commonly referred to as optical segments 240. An input end of the OOF 231 is connected to an optical output of the OFI 210 to receive probe light 201 generated by the Tx 212 for propagating said light along the OOF 231. In some embodiments, the OFI 210 may further include one or more load light sources 213 to transmit load light into the OOF line 231 along with the probe light 201 spectrally separate therefrom, as described below.

In the illustrated example, each of the optical segments 240ₙ (except possibly the last optical segment 240*_{N}*) includes a relay optical fiber 241*ₙ* and a sensor optical fiber 242*ₙ*, which may be commonly referred to as the relay and sensor optical fibers 241 and 242, respectively. The relay optical fibers 241 of consecutive ones of the optical segments 240, e.g. 240*ₙ* and 204_{*n*+1}, are end-connected via optical amplifiers (OAs) 220 to form a relay optical fiber line 244.

The length of one optical segment 240 may be e.g. in a range from about 10 km to about 120 km, or from about 40 km to about 100 km, or as suitable for a particular application. In some embodiments, the length of the relay and sensor optical fibers of a same optical segment 240 may be about the same. In some embodiments, the length of the relay and sensor optical fibers of a same optical segment 240 may differ. The relay and sensor optical fibers of a same optical segment 240 may or may not be located along each other. Some implementations may include one or more optical segments 240, e.g. those that are sufficiently short, where the relay optical fiber 241 of the segment also serves as the sensor optical fiber of the segment. The ROF line 232 connects to an optical input of the optical receiver 214 the OFI 210 to return thereto parts of the probe light 262ₙ reflected back by back-scattering in sensor optical fibers 242*ₙ*. The back-scattering may include Raleigh back scattering in the sensor optical fiber and/or back-reflections from, e.g., FBGs, discrete broadband reflectors, or UV induced random reflectors (enhanced scattering fiber) that may be incorporated within the optical sensing fibers 142ₙ in some embodiments.

The OAs 220 are configured to amplify the probe light 201 prior to the launching thereof into both the relay optical fiber 241*ₙ* and the sensor optical fiber 242*ₙ* of the optical segment 240*ₙ*, via an optical splitter 272. The optical splitters 272 may be located close to outputs of the corresponding OAs 220, before the output light of the OA is noticeably attenuated by propagating in the optical fiber. The OAs 220 are typically rare-earth doped optical OF As, such as e.g. EDFAs. In some implementations, optical amplification along the OOF line 231 may be provided along the relay optical fibers 241*ₙ*, e.g. via the Raman effect (Raman amplifiers). In such implementations, the OAs 220 may represent sections of the relay optical fibers 241*ₙ* with positive net optical gain due to Raman amplification. In some implementations, the OAs 220 may include one or more SOAs.

Having different optical fibers for optical sensing and for relaying the probe light 201 along the optical fiber line 231 allows selection of the optical power ratio for light propagating into the sensor optical fibers 242*ₙ* and the relay optical fibers 241*ₙ*. The ability to adjust, e.g. at a system design stage, the optical power injected into the sensor optical fibers 242*ₙ* relative to the optical power injected into the relay optical fiber 241*ₙ* provides a degree of control over non-linear signal distortion of the optical probe signals along the optical fiber line 231 while ensuring that the amount of back-scattered light 261ₙ from the sensor optical fibers 242*ₙ* provides a sufficiently high signal to noise (SNR) ratio at the optical receiver 214.

The optical splitter 272, e.g. a directional optical coupler, may have an asymmetric optical splitting ratio to direct relatively more light power into the sensor optical fiber 242*ₙ* than the corresponding relay optical fiber 241*ₙ*. In this way, nonlinear distortions of the probe light 201 in the relay optical fiber line 244 may be controlled to an acceptable level, while at the same time sending enough light into the sensor optical fibers 242*ₙ* to obtain therefrom a sufficient amount of back-scattered light 261*ₙ*. The back-scattered light 261ₙ may be due to the Raleigh back-scattering on random fiber non-uniformities, or due to intentionally introduced back-reflectors, such as, e.g., fiber Bragg gratings (FBG), discrete broadband reflectors, or UV induced random scatterers (enhanced scattering fiber), which may be incorporated into one or more of the sensor optical fibers 242ₙ. An optimal value of the splitting ratio of the splitter 272 may depend on a particular implementation, e.g. on the length of the relay and sensor optical fibers 241*ₙ*, 242*ₙ*, on the fiber type, etc. Typically, the optical splitter 272 may be configured to couple into the sensor optical fiber 242*ₙ* at least 3 times, or at least 4 times, or preferably at least 5 times more optical power than into the relay optical fiber 241*ₙ*. As an example, the optical splitter 272 has a splitting ratio of 15:85. In other embodiments, the optical splitter 272 may be configured to direct at least as much, or more, optical power into the relay optical fiber 241*ₙ* than the sensor optical fiber 242*ₙ*. In such embodiments the fraction of probe light directed into the sensor optical fiber 242*ₙ* may be selectively amplified by a booster OA (not shown) connected between the optical splitter 272 and the sensor optical fiber 242*ₙ*.

The sensor optical fibers 242*ₙ* are connected to the ROF line 232 via corresponding optical loop-back (OLB) paths 270*ₙ*. Selected parts 262ₙ of light 261ₙ that is reflected or scattered back at various locations along the sensor optical fibers 242*ₙ*, are coupled into the ROF line 232 via corresponding ones of the OLB paths 270*ₙ* and are directed back to the OFI 210 comprised in return light 235. The ROF line 232 includes a sequence of optical fiber segments 260*ₙ*, which may be end-connected via return-path OAs 275 ("OAs 275"). The OAs 275 are configured to amplify the back-scattered light on its way to the OFI 210 to compensate for optical loss in the return path. The selected parts 262ₙ may be back-scattered light of selected wavelength channels, e.g. the probe channels 117*ₙ*.

The optical receiver 214 of the OFI 210 is connected to receive the return light 235 and to perform measurements thereon, e.g. as known in the relevant art. The measurements may include measurements of temporal variations of the amplitude and/or phase of the back-scattered light 262ₙ received from each of the sensor optical fibers 242ₙ. The OFI 210 may be configured to process the measurements of the return light 235 to obtain sensing information related to conditions of light propagation along the sensor optical fibers 242*ₙ* or in parts thereof, or temporal changes in said conditions. The sensing information may include, but is not limited to, acoustic and/or vibration sensing information, temperature sensing information, pressure sensing information, and the like. The OFI 210 may use various known in the art methods for extracting said sensing information from the return light 235.

In the illustrated example, an OLB path 270*ₙ* includes an optical circulator 274, an optional optical preamplifier 252, and an optical add-coupler 277*ₙ*, which may be wavelength-selective. The optical circulator 274 is one embodiment of a device configured to couple probe light 201 in the sensor optical fiber 242*ₙ* and to couple back-scattered light 261ₙ out of the sensor optical fiber 242*ₙ*; it may be replaced, e.g., with a directional optical coupler, at a cost of a higher insertion loss.

The probe light 201 may include a temporally ordered set of optical probe signals, e.g. the optical probe signals 115 (FIG. 1), transmitted over a set of spectrally-separate wavelength channels *Cₙ,* e.g. the set 116 of *N* wavelength channels 117ₙ, with the corresponding center wavelengths λₙ. (optical frequencies v*ₙ*), *n* =1,..., *N,* e.g. as described above with reference to FIG. 1. The center wavelengths λₙ, *n* =1,..., *N,* may or may not be sequentially ordered in wavelength values. Each, or at least some, of the first (*N*-1) OLB paths 270*ₙ* may be configured to selectively couple into the ROF line 232 only back-scattered light 262ₙ of a corresponding one of the wavelength channels Cₙ*,* so that the Rx 214 receives back-scattered light of different wavelength channels from different ones of the sensor optical fibers. Here, "only" means that all other wavelength channels are attenuated by at least an order of magnitude, preferably five orders of magnitude or more, in power relative to the selected wavelength channel.

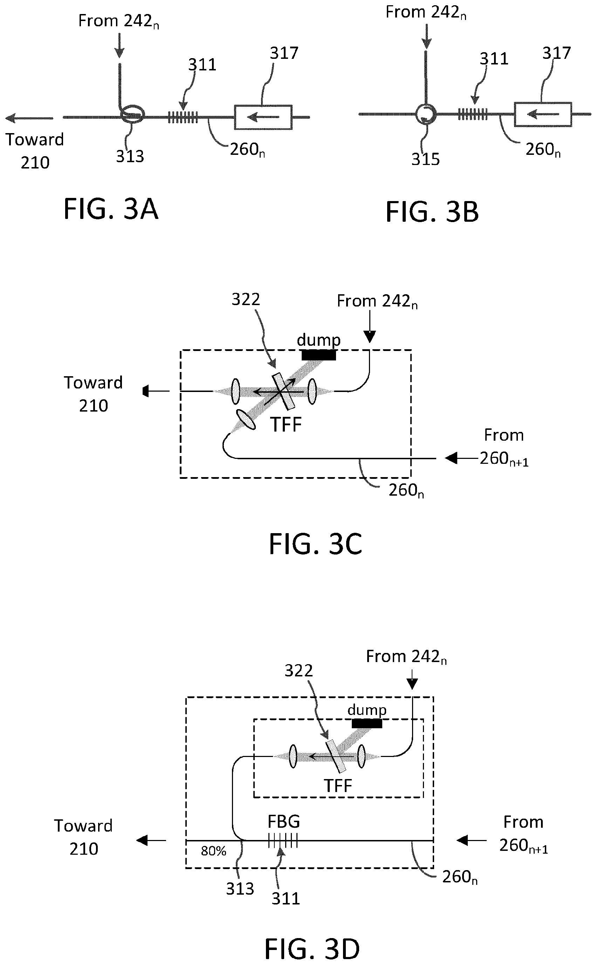

The add-couplers 277ₙ may be wavelength-multiplexing, to selectively add the back-scattered light of the corresponding ones of the wavelength channels Cₙ (wavelengths λₙ) to light propagating back toward the OFI 210 along the ROF line 232. In a "through" path, i.e. along the ROF line 232, the add-couplers 277ₙ are configured to block the n-th wavelength channel Cₙ received from upstream, and to pass through light of the remaining (*N*-1) wavelength channels Cₘ at the wavelengths λ*ₘ* ≠ λ*ₙ*, or at least all of the channels C*ₘ* that are coupled into the ROF line 232 upstream of the add-multiplexer 277*ₙ*. Here, "upstream" means farther from the OFI 210 along the ROF 232. From an output of the add-coupler 277*ₙ*, the cross-coupled light signals 262ₙ, 262ₙ₊₁, ..., 262_{N} of the channels *Cₙ*, Cₙ₊₁, ..., C*_{N}* propagate toward the OFI 210. The add-coupler 227*ₙ* may be embodied, e.g., as described below with reference to FIGs. 3A-3D.

The last OLB path 270*_{N}* may lack an add-coupler 277, with the back-scattered light 261_{N} from the last sensor optical fiber 242_{N} being coupled into an end of a last segment of the ROF line 232 without filtering. In some implementations, e.g. wherein the OFI 210 is configured to transmit load light into the OOF 231 in one or more spectrally-separate load channels, the last OLB path 270_{N} may include an optical filter 278 configured to selectively attenuate light in the probe channels *Cₙ*, *n* = 1,... *N*, to increase the relative power of the load light relative to the back-reflected light of the probe channels C*ₙ* in the ROF line 232. In some implementations, the optical filter 278 may be omitted, or may be configured to pass only one, or a subset of, the probe channels Cₙ and the load light, e.g. only the probe channel C_{N} and the load light, therethrough to propagate through the OAs 275 of the return OF line 232.

FIGs. 3A-3D illustrate example wavelength-selective implementations of an add-coupler 277*ₙ*. In a first implementation shown in FIG. 3A, the add-coupler 277n includes a directional coupler 313 connecting to a fiber Bragg grating (FBG) 311 followed by an optical isolator 317 located in the ROF line 232 upstream of the directional coupler 313. The FBG 311 is configured to selectively reflect back light of the n-th channel Cₙ (wavelength λₙ) while allowing the remainder of the incident light spectrum to pass therethrough. Thus, the coupler 313 and the FBG 311 cooperate to act as a selective add-drop coupler for the n-th wavelength channel Cₙ*,* selectively substituting light of the n-th probe channel C*ₙ* received from the sensor optical fiber 242*ₙ* via OLB 270*ₙ* for any light of the n-channel Cₙ that may be incident upon the FBG 311 in the downstream direction along the optical fiber segment 260ₙ. In some embodiments the isolator 317 may be omitted, at a potential expense of added noise on the sensing measurements due to sideband reflection from FBG 611 of not-selected channels *Cₘ*, *m≠n* or Rayleigh scattering of same channels upstream in the ROF line 232. Light propagating upstream in ROF line 232 that is not Rayleigh scattered or absorbed by fiber losses is eventually absorbed by an output port of an upstream OA 275, which typically includes an optical isolator. In some implementations, the directional coupler 313 may have an asymmetric coupling ratio, so that more than 50% of light propagating down the ROF line 232 is passed through the coupler 313 toward the OFI 210. By way of example, a 80/20 directional coupler may be used. Such an asymmetric coupling ratio of the coupler 313 may reduce the transmission loss in the ROF line 232, at the expense of a somewhat higher gain of the optical preamplifier 252 in the OLB path 270n. In this way the output power of the return-path OAs 275 can be reduced compared to an embodiment with a symmetric 50:50 coupler 313, thus reducing the nonlinear distortion in the ROF line 232. FIG. 3B illustrates an embodiment where the directional coupler 513 is replaced by a circulator.

The FBG 311 may have extra transmission loss outside of the reflection bandwidth thereof, due to coupling to cladding modes. This can to some degree be mitigated in implementations where the channel frequency *v*ₙ increases with increasing channel number *n* (i.e. with distance of the corresponding sensor optical fiber 242ₙ from the OFI 210), since cladding losses typically occur at frequencies below the FBG center frequency.

FIG. 3C illustrates an implementation of the add-coupler 277*ₙ*, in which the FBG 311 is replaced with a thin-film filter (TFF) 322 having a passband that is smaller than the interrogation channel frequency spacing Δv and is centered approximately at the central wavelength of the channel Cₙ being added to the return path, to include the center wavelength λₙ of the optical probe signals being transmitted in said channel. The TFF 322 is configured to multiplex light of the wavelength channel Cₙ received from the corresponding sensor optical fiber 242ₙ, with light of the wavelength channels *Cₘ*, *m*>*n* (wavelength λₙ₊₁, ..., λ*_{N}*) received along the ROF line 232, and to pass the multiplexed light towards the OFI 210. An advantage of this configuration compared to that of FIG. 3A is a potentially reduced insertion loss. A potential disadvantage of this configuration is a possibly poorer extinction, i.e. the suppression of the dropped wavelengths relative to the transmitted, which may lead to a crosstalk between sensing signals from different sensor optical fibers 242*ₙ*.

FIG. 3D illustrates an implementation of an add-coupler 277n combining the FBG 311 with the TFF 322. This implementation may be useful if the FBG 311 has poor sidelobe suppression in reflection. The TFF 322 may help to improve the extinction of not-selected channels C*ₘ*, *m≠n*, in the optical loopback path 370*ₙ*.

In some embodiments, the optical transmitter 212 of the OFI 210 may be configured to transmit the optical probe signals of the probe light 201 at a temporal series start times, such that a center wavelength of those of the optical probe signals that are transmitted at consecutive ones of the start times is different. The optical probe signals transmitted at each of the start times are typically configured to facilitate extracting desired sensing information from the back-scattered light using conventional methods.

Referring to FIGs. 4A and 4B, in some embodiments an optical transmitter of an OFI, such as e.g. the transmitter 112 or the transmitter 212 of the OFI 210, is configured to transmit, within a transmission period *T* 403, *K* optical probe signals at a temporal series 401 of *K* corresponding (pulse) start times *t*₁, *t₂,* ..., *tₖ*, ... *t_{K}* ("start times *tₖ*"), so that different ones of the optical probe signals within the transmission period *T* have different center wavelengths λₖ and are transmitted in different ones of the wavelength channels C*ₙ*, e.g. different ones of the wavelength channels 117ₙ of FIG. 1. In the described example, the center wavelength of the wavelength channels are approximately the center wavelength of the optical probe signals. In FIGs. 4A and 4B, the optical probe signals are indicated at 415 ("probe signals 415"), and shown schematically with dotted lines as optical pulses. The optical probe signals 415 may be examples of the optical probe signals 115 described above. Vertical offsets between different probe signals 415 in the figures represent wavelength offsets between the center wavelengths thereof ("channel spacing 119"). In various embodiments, each of the probe signals 415 may be a single optical pulse or a sequence of optical pulses, together spanning a frequency band of a spectral width *B_{c}.* In a typical embodiment the spectral width *B_{c}* is much smaller, at least by a factor of 10, than the frequency spacing Δν between adjacent ones of the center wavelengths.

The optical transmitter, e.g. 112 or 212, thus transmits, over a transmission period *T* 403, *K* optical probe signals 415 at *K* different center wavelengths λₖ (e.g. in *K* different wavelength channels 117). Here *T*=*K·Δt*, where Δ*t* is the time delay between consecutive start times. The transmission of same or similar optical probe signals in *K* wavelength channels may be repeated with a repeat period *T*ᵣ 405 ("sampling period") that is equal or greater than the transmission period *T* 403 of the K-pulse sequence. In the illustrated example, the duration 410 *tₚ* of one optical probe signal 415 transmission is smaller than the delay time Δ*t*, so that the optical probe signals 415 of different wavelength channels transmitted at consecutive start times, e.g. *tₖ* and *t*_{*k*+1}, do not temporally overlap. In some embodiments, the transmission duration 410 *tₚ* of one optical probe signal 415 may somewhat exceed the delay time Δ*t*, so that the optical probe signals 415 of different wavelength channels transmitted at consecutive start times *tₖ* overlap in time at the edges. In some embodiments, there may be an idle time Δ*T* 407 between two consecutive transmission periods 403 when no probe light is being transmitted (FIG. 4A).

In the example illustrated in FIGs. 4A and 4B, the number of different signal start times *tₖ* within the transmission period *T* 403 is six, i.e. *K* = 6, but may vary from 5 to 50 or greater, 8-20 typically. In some embodiments, the number *K* of the optical probe signals 415 transmitted over one transmission period *T* 403, and thus the number of spectrally separate wavelength channels in which the optical probe signals are transmitted, is equal to the number *N* of different optical fibers to be interrogated with the corresponding ones of the optical probe signals 415. For example, the *N* sensor optical fibers 242*ₙ* of the optical system 230 may be interrogated by cycling through the *N* wavelength channels Cₙ (e.g. the wavelength channels 117 of FIG. 1), transmitting the optical probe signal 415 of each channel at a different one of the transmission start times *tₖ.* The optical transmitter 212 may repeatedly cycle through the *N* wavelength channels C*ₙ* 117 over a repeat period *Tᵣ* 405 equal or greater than the transmission period *T* 403.

In other embodiments, a same optical probe signal 415 may be used to interrogate two or more of the *N* sensor optical fibers, e.g. 242ₙ of the OOF line 231, so that the number *K* of the spectrally separate wavelength channels is smaller than the number *N* of different optical fibers being interrogated. The repeat period *Tᵣ* 405 may be suitably extended to avoid temporal overlaps at the receiver, e.g. 214, of light of a same optical probe signal back-scattered in different optical fibers.

FIGs. 4A and 4B illustrate example implementations for separately interrogating six different optical fibers, e.g. six different optical fiber segments 140 (FIG. 1) or six different sensor optical fibers 242*ₙ*, by cycling through *N* = 6 wavelength channels over each transmission period *T* 403. In the example of FIG. 4A, the center wavelength of the optical probe signals 415 increases with time step-wise at each transition to a subsequent probe signal 415 over the duration of the transmission period 403. In a variation of this example, the center wavelength decreases step-wise over the duration of the transmission period 403. Such transmission scheme results in a relatively large wavelength shift of about (TV-1)Δλ at a juncture of consecutive repeat periods 405. An abrupt large wavelengths shift of probe light may cause undesired transient response of the OAs of the optical fiber line being interrogated, e.g. the OAs 220 of the OOF line 321 of FIG. 2. It may therefore be preferable to limit abrupt wavelength shifts of the probe light that happen to values that are much smaller than the OA gain bandwidth, e,g. less than ¼ thereof . Here, "abrupt" refers to changes that happen on a time scale comparable or faster than a gain relaxation time in the downstream OAs. The gain relaxation time for an EDFA may typically be in 5 - 10 µsec.

In the example of FIG. 4B, the center wavelength of the optical probe signals 415 first increases step-wise over approximately one half of the transmission period 403 (repeat period 405), and then decreases, e.g. over the other half of the transmission period 403 (repeat period 405). Here, "increases" ("decreases") refers to switching the one of the center wavelengths being transmitted to a longer (shorter) one of the center wavelengths at transitions between two of the optical probe signals 405 with consecutive ones of the start times *tₖ.* In a variation of this example, the center wavelength first decreases, and then increases over the duration of the transmission period 403. Such a scheme has a potential advantage of limiting abrupt wavelength shifts of the probe light both within the repeat period 405 to about 2Δλ, or less than three times the spacing Δλ between the center wavelengths. A similar scheme that may also provide sufficient advantage by limiting abrupt wavelength shifts is one where the center wavelength of the transmission increases over ¼ of the repeat period, e.g. 405, then decreases over another ¼ of the same repeat period, then increases over another ¼ of the same repeat period, and finally increases over the last ¼ of the same repeat period. In another example, the center wavelength of the transmission increases by stepping up through the "even" wavelength channels with the center wavelengths λ₂ₖ over about half of the transmission period *T* 403, and then, the center wavelength of the transmission decreases by stepping down through the "odd" wavelength channels with the central wavelengths k₂ₖ₊₁ over the other half of the transmission period *T* 403. Both embodiments, with relatively small wavelength changes between steps, are expected to result in a more stable operation of the downstream OAs, e.g. the OAs 220 of the OOF line 231.

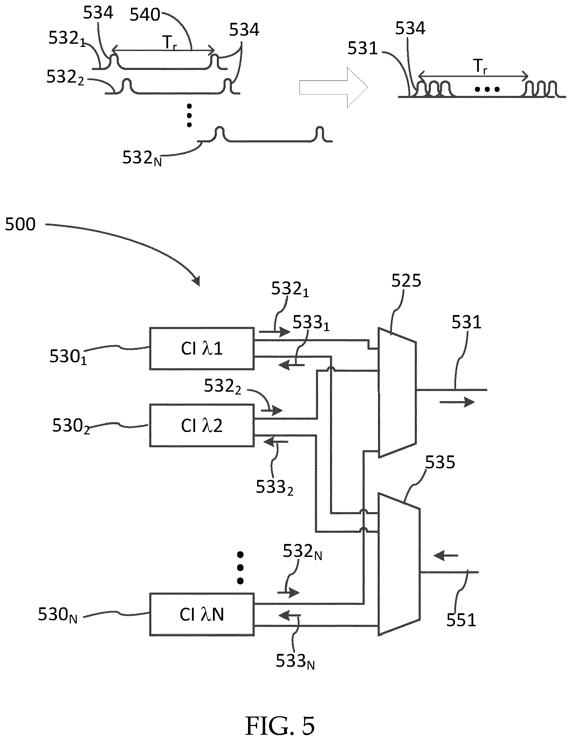

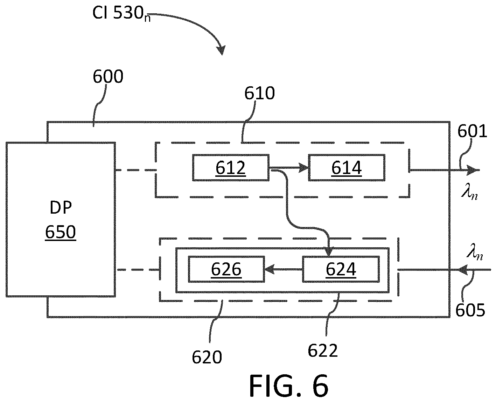

FIG. 5 illustrates an example implementation 500 of the OFI 210 of FIG. 2 ("OFI 500"). The OFI 500 is a multi-channel device including a plurality of *N* ≥ 2 channel interrogators (CIs) 530₁, ..., 530*_{N}*, generally referred to herein as CIs 530. Each of the CIs 530 includes an optical transmitter (e.g. 610, FIG. 6) and an optical receiver (e.g. 620, FIG. 6). Optical outputs of the CIs 530 connect to an optical wavelength multiplexer (MUX) 525, while optical inputs of the CIs 530 connect to an optical wavelength demultiplexer (DMUX) 526, as indicated in FIG. 5. The optical transmitters of the *N* CIs 530, together with the MUX 525, embody the optical transmitter 112 of the OFI 110 or the optical transmitter 212 of the OFI 210. The optical receivers of the *N* CIs 530, together with the DMUX 526, embody the optical receiver 214 of the OFI 210.

The CIs 530*ₙ*, *n* = 1,..., *N*, are configured to operate at corresponding ones of the center wavelengths λ*ₙ*, so that each of the CIs 530n is responsible for interrogating a corresponding one the sensor optical fibers 242*ₙ*. In an example embodiment, each of the CIs 530*ₙ* is configured to perform DOFS, e.g., DAS, measurements as known in the pertinent art, using optical probe signals 532*ₙ* of a corresponding wavelength channel C*ₙ*. The optical probe signals 532*ₙ* generated by the CIs 530*ₙ*, *n* =1,..., *N*, are then wavelength-multiplexed by the MUX 525 to obtain probe light 531. The probe light 531 may be an example of the probe light 201.

Referring to an insert at the top of FIG. 5, in some embodiments, each of the optical probe signals 532*ₙ*, which are generated by the corresponding CIs 530*ₙ* at corresponding ones of the center wavelengths λ₁, ..., λ_{N}, is a suitably configured optical pulse 534 repeatedly transmitted with a same repeat period *Tᵣ* 540. In some embodiments, each of the optical probe signals 532*ₙ* may be a group of two or more consecutive optical pulses repeatedly transmitted with the repeat period *Tᵣ* 540. In some of such embodiments, individual pulses of the group may somewhat differ in the center frequency thereof within the bandwidth of the corresponding wavelength channels. The CIs 530*ₙ* may time-synchronized to transmit different ones of the optical probe signals 532*ₙ* in a time interleaved fashion, so that the output probe light 531 includes a sequence of *N* optical probe signals of different center wavelengths within the transmission time period T 540.

In some embodiments, the optical probe signals 532ₙ are time-division multiplexed so that the CIs 530*ₙ* transmit probe pulses 534, or groups of pulses in some embodiments, at corresponding transmission start times *tₖ* (see e.g. FIGs. 4A, 4B) and in a specified order.

The optical probe signals 532*ₙ* of the different center wavelengths λₙ cause an optical system being interrogated, e.g. the optical system 230 of FIG. 2, to return corresponding optical response signals 533ₙ of the same wavelengths, which are received at an optical input of the OFI 500 with a returned optical signal 551. The optical response signals 533ₙ may comprise, e.g., the back-scattered light 151*ₙ* or 262ₙ of corresponding wavelength channels Cₙ, e.g. 117*ₙ*, received from respective ones of the optical fiber segments 140*ₙ* or sensor optical fiber 242ₙ. The optical response signals 533ₙ are wavelength-demultiplexed by the DMUX 535 and provided to the corresponding ones of the CIs 530₁ - 530*_{N}*. The CIs 530₁ - 530*_{N}* then operate to measure and process the respective back-scattered light, e.g. 262ₙ, e.g., using methods known in the pertinent art, to obtain therefrom, e.g., acoustic and/or vibrational sensing information along, e.g. a corresponding optical fiber segments 140*ₙ* or a corresponding sensor optical fiber 242ₙ.

FIG. 6 shows a schematic block diagram of an example embodiment 600 of a channel interrogator 530n ("CI 600"). The CI 600 includes an optical transmitter 610 configured to transmit an optical probe signal 601 at a central wavelength λ*ₙ*. Theoptical probe signal 601 may include a sequence of probe optical pulses to interrogate a length of an optical fiber. The CI 600 further includes an optical receiver 620 configured to receive parts of the pulses returned by the system being interrogated and to perform measurements thereon, e.g. DAS measurements, typically including measurements of temporal variations of an optical phase of back-scattered light. Results of the measurements are provided to a digital processor 650 to obtain optical fiber sensing information therefrom, e.g. using techniques known in the pertinent arts. The processor 650 may also be used to control the optical transmitter 610 of the CI 600. In a system comprising a plurality of the CIs 600 operating at different center wavelengths *λₙ*, *n* = 1,..., *N*, such as e.g. the OFI 110 or the OFI 210, the processor 650 may be shared with some or all of the CIs used in the system.

In an example embodiment, the optical transmitter 610 comprises a laser 612 that is followed by an optical modulator (OM) 614 and an optional optical amplifier (not explicitly shown). The optical modulator 614, e.g. an acoustic optical modulator (AOM), is controlled by the digital processor 650 via a suitable driver (not explicitly shown) to apply a desired modulation signal to the laser light to generate a sequence of optical probe pulses. In some embodiments the optical probe signal 601 at the output of the OM 614 is a sequence of optical probe pulses that are about 5µsec to 50µsec long. The pulses may be frequency-modulated ("frequency-chirped"), which enables signal compression at the receiver using techniques known in the art. E.g., the processor 650 may operate the OM 614 to monotonically shift ("sweep") the output light in frequency over the duration of each pulse in accordance with a complex modulation function *h*(*t*). By way of example, the amount of frequency shift may be, e.g. in a range from 5 to 200 MHz over a duration of each pulse. In some embodiments, the pulses may be linearly frequency modulated, i.e. with the chirp rate dv/dt constant over the pulse duration; here *v* = d*φ*/(d*t*)/2π is the instantaneous optical frequency, *φ* denoting the optical phase and t denoting the time. In some embodiments, the probe pulses may be suitably apodized, i.e. with desired durations of the rising and falling edges thereof. In some embodiments, e.g. wherein probe pulses transmitted in different wavelength channels overlap at the edges to avoid dips in the combined power, the duration of each of the rising and falling edges of each pulse may be less than 2 µsec, or preferably about or less than 0.2 µsec to minimize the time duration where FWM can occur. In some embodiments, the chirp rate may vary over the duration of a pulse; e.g. the chirp rate at the pulse edges may be greater than in a middle portion of the pulse; e.g. the chirp rate may gradually decrease toward the center of the pulse. Non-linearly varying ("sweeping') the optical frequency in this manner may contribute to suppress compressed-signal side-lobes at the receiver. Techniques for generating frequency-chirped pulses using optical modulators, such as e.g. AOM or interferometer-based, are well known in the art. The optical probe signals 601 from an output of the optical transmitter 610 may be sent to a MUX, such as e.g. the MUX 525 of the OFI 500, to be wavelength-multiplexed with corresponding outputs of other instances of the CI 600 centered at a different wavelength, e.g. as described above with reference to FIG. 5. In some embodiments, the processor 650 may coordinate the operation of the optical modulator 614 with optical modulators of other co-located CIs operating at different wavelengths to time-multiplex the output optical pulses thereof.

The optical receiver 620 may include an opto-electric (OE) converter 622 followed by an analog-to-digital converter (ADC) (not explicitly shown) that connects to the processor 650. The optical receiver 620 may be a coherent optical receiver adapted to make phase-sensitive measurements of the received light, with the processor 650 configured to extract relevant optical phase and/or amplitude information from the measurements. The OE converter 622 may include an optical mixer 624, such as e.g. a dual-polarization 90° optical hybrid, to coherently mix the received light with local oscillator light sourced from an output of the laser 612, e.g. separately in two orthogonal polarizations, as known in the art. The output(s) of the optical mixer 624 connect to a photodetector circuit 626, which includes one or more photodetectors, e.g. one or more photodiode pairs connected, e.g., for balanced detecting (not explicitly shown), typically followed by one or more trans-impedance amplifiers ("TIAs", not explicitly shown). Electrical signals generated by the photodetector circuit 626 are converted into one or more streams of digital samples and processed in the processor 650 using a suitable signal-processing algorithm to obtain, e.g., acoustic or other sensing data along the corresponding one of the optical sensing fibers of a system being tested, e.g. the sensor optical fibers 242*ₙ* of the optical system 230 of FIG. 2. In various embodiments, such sensing data may be used to detect the presence of mechanical vibrations, fiber faults, localized strain, localized temperature excursions, etc., and/or the location of such events along the optical fiber line.

In some embodiments, e.g. wherein the optical probe signal 601 generated by the transmitter 610 includes frequency-chirped optical pulses, the digital processor 650 may be configured to process the received streams of digital samples using a matched-filter technique. E.g. the processor 650 may be configured to obtain a down-converted complex digital representation of the optical field of the received back-scattered light, and compute a convolution of said digital representation with a matched-filter impulse response to obtain a back-scattering response of a corresponding optical fiber. The matched-filter impulse response, *h**(-*t*), is a time-inverted complex conjugate of the complex modulation *h*(*t*) applied to the transmitted probe pulse. E.g. the processor 650 may be configured to use the well-known "overlap-save" FFT-based convolution algorithm to perform the matched-filter digital signal processing. Techniques to transmit frequency-chirped pulses and to process back scattered signals using filters matched to the transmitted pulses are known in the art.

FIG. 7A illustrates an example pulse sequence 700 of a probe light that may be generated by optical transmitter(s) of an OFI, such as e.g. OFIs 110, 210, or 500, for interrogating sixteen optical fibers, such as e.g. sixteen optical fiber spans 140 of the OOF line 130 of FIG. 1, or sixteen optical sensor fibers 242*ₙ* of the OOF line 231 of FIG. 2 (*N* = 16). In this example, the pulse sequence 700 is transmitted over a transmission period *T* 710 at a temporal series of 16 start times spaced by a same time delay 701. Each consecutive pulse 703 has a different center wavelength than the preceding pulse, so that different pulses 703 of the sequence 700 are transmitted at different center wavelengths λ*ₙ* (different wavelength channels C*ₙ*). In the described example, the center wavelengths λ*ₙ* of the wavelength channels C*ₙ* are approximately the center wavelength of the probe pulses 703. The pulse sequence 700 may be transmitted, e.g. by optical transmitters 610 of the corresponding CIs 530n, *n* =1, ..., 16 (FIGs. 5 and 6) transmitting in sequence one after another in a time-synchronized fashion, e.g. with a same time delay Δt 701.

In FIG. 7A, each of the pulses is labeled with a corresponding center wavelength thereof λ1, λ2, ..., λ16, with the center wavelengths here being numbered in a wavelength-increasing order, so that λ1< λ2 < λ3< ... < λ16. The probe light, e.g. 531, may include a periodic repetition of the pulse sequence 700 with a repeat period *Tᵣ* ≥ *T* 710. The optical transmitter(s) repeatedly cycle through the *N*=16 different center wavelengths transmitting in each cycle (each transmission period 710) the pulse sequence 700 of *N*=16 pulses, each of the 16 pulses at a different wavelength, as illustrated in FIG. 7A.

In the illustrated example, the consecutive pulses 703 do not overlap, which eliminates or at least reduces nonlinear distortion of the pulses due to the four-wave mixing (FWM) in the optical fiber line being interrogated. Accordingly, both the wavelength and the optical power of the probe light varies in time, with the transmission wavelength abruptly changing and the optical power dropping at transitions between consecutive ones of the pulses 703.

When the pulse sequence 700 propagates in an amplified optical line, e.g. the OOF line 130 of FIG. 1 or the OOF line 231 of FIG. 2, the optical amplifiers thereof (e.g. the OAs 120 or 220) may react to the changes in the input optical power and/or wavelength by varying the amplifier gain, causing undesired transients, e.g. spikes and/or ripples, in the probe optical pulses at the amplifier output(s). These transients may grow in amplitude as the probe pulses propagate through a series of optical amplifiers, e.g. the OAs 120 of FIG. 1 or the OAs 220 of FIG. 2.

In a typical embodiment, the downstream optical amplifiers are rare-earth doped OF As, e.g. EDFAs. The gain spectrum of an active medium (e.g. erbium-doped fiber) of an OFA is typically broad but varies significantly with wavelength on a scale of a few nanometers. Although such optical amplifiers typically include gain flattening filters (GFFs) to flatten a net gain spectrum of the optical amplifier over a target wavelength range, changes in the wavelength or power of the light being amplified may change the net gain experienced by the light being transmitted through the amplifier.

In the example illustrated in FIG. 7A, the center wavelengths of consecutively transmitted pulses 703 first increase, and then decrease over the duration of the transmission period 710 (~ 600 µs in this example); this limits the maximum wavelength shift at probe signal transitions in a time interval including a sequence of transmission periods 710. However, the overall wavelength variation of the probe light across the pulse sequence 700 may still have a significant effect on the OA gain spectrum.

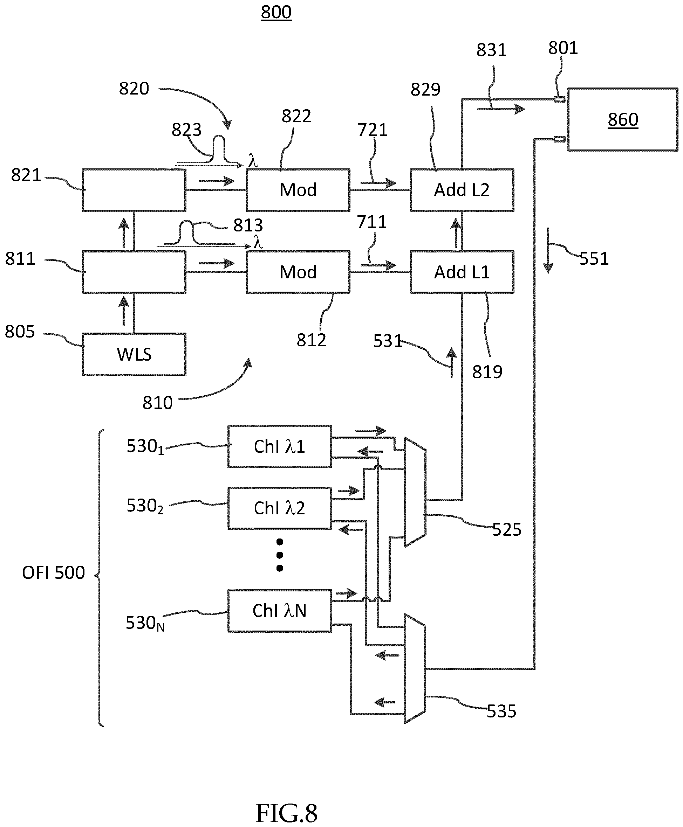

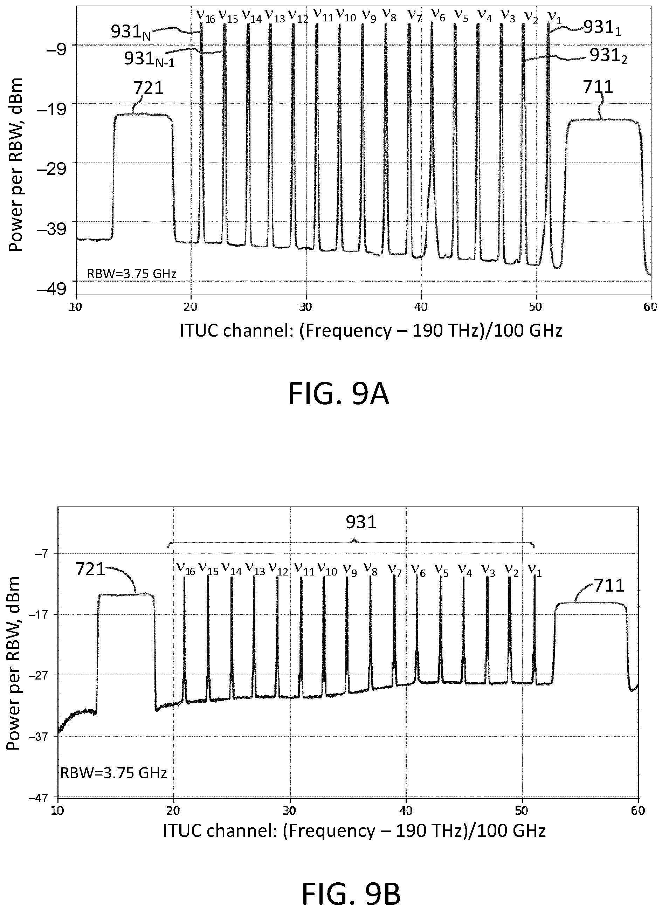

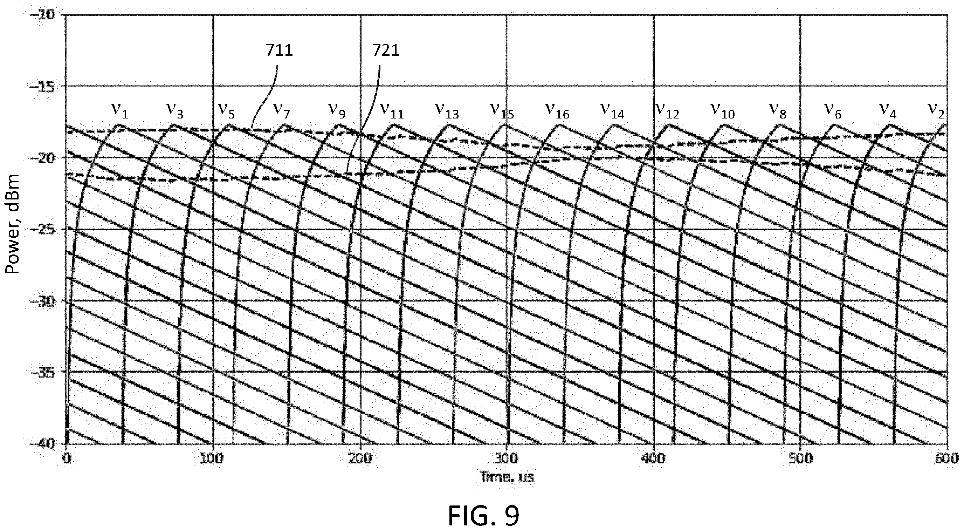

Some embodiments may therefore use one or more channels of temporally varying load light in addition to the probe light to stabilize the gain of optical amplifiers in an optical fiber line being interrogated. FIG. 7B illustrates, for an example embodiment described below with reference to FIGs. 8, 9A, and 9B, the co-modulation of load light in load light channels 711 and 721 synchronized to the pulse sequence 700 of FIG. 7A. The load light channels 711 and 721 are spectrally located at opposite sides of the entire spectrum of the probe channels 931, as illustrated in FIGs. 9A and 9B.

FIG. 8 illustrates an example apparatus 800 configured to output the probe light 531 in parallel with two channels of load light, 721 and 711. The apparatus 800 may be an example of the optical terminal 105 of FIG. 1 or the optical terminal 205 of FIG. 2 according to some embodiments. The apparatus 800 includes, in addition to the OFI 500 described above, two sources of temporally-varying load light, a first load light source 810 and a second load light source 820. In the shown example these sources are implemented using a common white light source 805, followed by respective passband filters, 811 and 821, and optical modulators (OM), 812 and 822. The first passband filter 811 is configured to extract light of a first wavelength range 813; the extracted wavelengths of light are directed to a first OM 812, which outputs temporally varying load light of a first load channel 711. The rest of the white light is passed to the second passband filter 821, which is configured to extract therefrom light of a second wavelength range 823. The second extracted wavelengths are passed to a second OM 822, which outputs temporally varying load light of the second load channel 721. Each of the first and second OMs 812, 822 may be implemented, e.g., as a semiconductor optical amplifier (SOA), conveniently combining optical modulation and amplification functions; other suitable optical modulators, such as but not limited to, e.g., acousto-optic modulators (AOMs), may also be used. Alternative implementations of the load light sources 820, 810 are possible, as will be apparent to those skilled in the art. The load channels 711, 721 are spectrally separate from the probe light 531 to allow for wavelength multiplexing and de-multiplexing of the probe and load light. In the illustrated embodiment, the wavelength ranges 813, 823 of the load light are located at opposite sides of a wavelength range of the probe light 531, e.g. as illustrated in FIG. 9A.

The probe light 531 from the OFI 500, the load light of the first load light channel 711, and the load light of the second load light channel 721 are directed to a same optical output 801, e.g. using add couplers 819 and 829, to form the output light 831 of the apparatus 800. Each of the add couplers 829, 819 may be implemented with suitable wavelength multiplexers. The output light 831 may be launched in, e.g., the OOF line 231 of FIG. 2 in place of the probe light 201 in some embodiments of the DOFS system 200.

In some embodiments, the spectral bands 813, 823 of the load channels 711, 721 are each wider than the bandwidth of the probe light 531 at each center wavelength. In some embodiments, each spectral band of a load channel 711, 721 is preferably at least as large as the frequency spacing Δv between adjacent wavelength channels Cₙ of the probe light 531. In other embodiments, the load channels 711 and 721 may be relatively narrow-band. In some embodiments, only one load light source may be used.

FIGs. 9A and 9B schematically illustrate example time-averaged spectra of the output light 831 of the apparatus 800 that is configured to interrogate sixteen optical fibers of an amplified optical fiber line, e.g. a sixteen-segment implementation of the OOF line 130 of FIG. 1 or of the OOF line 231 of FIG. 2, (e.g. *N* = 16 sensor optical fibers 242*ₙ*). The spectrum shown in FIG. 9A is an example time-averaged spectrum of the interrogation light at an input to one of the optical relay fibers 241ₙ in the relay optical fiber line 244. FIG. 9B shows an example time-averaged spectrum at the input to one of optical fiber segments 260*ₙ* the ROF line 232, i.e. the output one of the OAs 275 in the ROF line 232, for an example configuration of the OLB path 270_{N} described below.

Spectral lines 931₁, 931₂, ..., 931_{N}represent the spectrum of the probe pulse sequence 700 of FIG. 7A, and correspond to the sixteen wavelength channels Cₙ of the probe light, with the respective central frequencies ν₁, ν₂, ... , ν₁₆ (wavelengths λ₁, λ₂, ... , λ₁₆ in FIG. 7A, λₙ=*c*/νₙ). In this example, the wavelength channels of the probe light are approximately aligned with the C-band ITU frequency grid, and are spaced by approximately 200GHz. The frequency spacing of the probe channels Cₙ may be somewhat uneven to reduce four-wave mixing. Load light in a first load channel 711 includes wavelengths that are smaller than any of the center wavelengths λ*ₙ*=c/ν*ₙ* of the optical probe light. Load light in a second load channel 721 includes wavelengths that are greater than any of the wavelengths of the probe optical channels 931₁, 931₂, ..., 931_{N}. In some embodiments, e.g. where the load light experiences random back-scattering in the sensor optical fibers and is transmitted over the ROF line 231, the spectral width of each load channel 711 and 721 preferably exceeds the spacing Δλ between adjacent ones of the central wavelengths λₙ of the probe channels 931. In the illustrated embodiment, the spectral width of each load light channel 711, 721 exceeds 2Δλ.

In some embodiments, one of the load channels 711 and 721, e.g. the short-wavelength load channel 711, is located around a wavelength corresponding to a maximum gain of the active optical fiber of the downstream OF As within an operating bandwidth of the OF As (e.g. OAs 220 in FIG. 2). The other of the load channels 711 and 721, e.g. the long-wavelength load channel 721, may be centered at a wavelength corresponding to a minimum gain of the rare-earth doped optical fiber of the downstream OF As within the same operating bandwidth. This may correspond to centering the load light channels 711, 721 approximately at the maximum loss and the minimum loss of the GFF used in the OF As. The active optical fiber may be e.g. a rare-earth doped optical fiber of the OF A, typically the erbium-doped fiber (EDF). The operating bandwidth is a spectral bandwidth that comprises all channels of the probe light and the load light channels.

Referring now back to FIG. 7B, the figure shows temporal variations of the load light power in the short-wavelength load channel 711 (solid line) and in the long-wavelength load channel 721 (dashed line). The load light of the load channels 711, 721 is injected into an optical fiber line, e.g. the OOF line 231 of FIG. 2, together with the probe optical pulse sequence 700 to stabilize the gain of downstream optical amplifiers, e.g. OAs 220 (FIG. 2). The optical power in the load light channels varies in time in synchronization with the pulse sequence 700 in FIG. 7A, to counteract the effect of probe light power and wavelength variations during the pulse sequence 700 in FIG. 7A on downstream optical amplifiers of the outbound optical fiber line, e.g. the OAs 220. The horizontal (time) axes in FIGs. 7A and 7B are aligned to illustrate temporal variations happening synchronously in the probe channels (FIG. 7A) and the load channels (FIG. 7B).

The optical power of both the first (711) and second (721) load light channels briefly rises in-between consecutive probe pulses 703, so as to at least partially compensate the effect of a drop in the power of the probe light on the gain of the downstream optical amplifiers, e.g. the OAs 220 in FIG. 2. In FIG. 7B, this is manifested by load light peaking 722 in-between the probe pulses 703, when the total optical power of the probe light drops. In some embodiments, the temporal spacing 713 between consecutive optical probe signals 703, i.e. between the tail end of a first of the two probe signals and the start time of the next one, may be smaller than the EDFA gain relation time, e.g. smaller than 10 µsec, or preferably about or less than 5 µsec; in such embodiments, the load light peaking 722 may be absent.

The optical powers of the two load channels 711 and 721 may change in opposite directions by a transition to a next optical probe signal, e.g. right after the peaking 722, so as to at least partially compensate the effect of changing the center wavelength λₙ of the probe light upon the gain spectrum G(λ) of the downstream OAs. In the example illustrated in FIGs. 7A and 7B, during a first half of the pulse sequence cycle 710, when the center wavelength of the probe light being transmitted increases step-wise at transitions between consecutive optical pulse signals 703, the "mid-pulse" optical power in the first load channel 711 (the short-wavelength side of the spectrum) increases, while the "mid-pulse" light power in the second load channel 721 (the long-wavelength side of the spectrum) decreases. During the second half of the cycle 700, as the wavelength of the probe light being transmitted decreases at signal transitions, the "mid-pulse" power of the first load channel 711 decreases, while the "mid-pulse" power of the second load channel 721 increases.

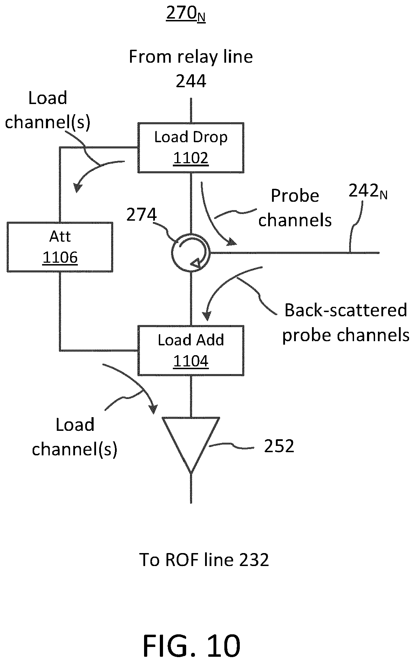

FIG. 10 shows, for the example described above with reference to FIG. 7A, a typical evolution of the mean optical power versus time that is expected to be returned back to the OFI 210 from optical pulses 703 in different probe channels Cₙ (spectral lines 931 in FIGs. 9A, 9B) due to the Raleigh back-scattering in the sensor optical fibers 242ₙ (FIG. 2). The Raleigh scattering is a random process, and the power of the scattered light will generally fluctuate, e.g. around the values plotted for the illustrated example. FIG. 10 shows expectation values (mean values) of the optical power of the return light in each probe channel Cₙ (spectral lines 931 in FIGs. 9A. 9B); actual signal power of the back-scattered light may fluctuate with a standard deviation that is comparable to the mean value (typically about one half thereof), and with a bandwidth equal to the optical bandwidth of the optical probe signal in the channel. These fluctuations may add some undesired SPM-induced phase noise into the return optical signal 235.

In order to keep the SPM-induced phase noise in the ROF line 232 to an acceptable level, the peak expectation value of the optical power of the back-scattered light in each channel Cₙ, of the probe light at the output of a typical return-path OAs 275 should preferably be limited, e.g. to about 0.3 mW or less in some typical embodiments. By way of example, for a 60 km long sensor optical fiber and a 600 µs sampling period, this corresponds to a time average per probe wavelength channel Cₙ less than about -12 dBm, or less than about 0 dBm summed over all 16 probe light channels 931 in this example.

Typically, an EDFA operating with an output power of less than 0 dBm will operate in an unsaturated regime where the gain has little dependence on the input optical power. This may be the case, e.g., when the pump power is relatively high, which may be desirable in order to achieve a low noise figure operation. It may be advantageous to operate the return-path OAs 275 in the saturated regime, since this will tend to stabilize the optical power of the return light as it propagates through the OAs. In some implementations, operation of the return-path OAs 275 in the saturated regime may be achieved, e.g., by increasing the light power in the load channels 711, 721.

Referring now back to FIGs. 9A and 9B, in some implementations the OF system 230 of FIG. 2 may be configured to have a higher ratio between the optical power of the load and probe light in the ROF line 232 than in the OOF line 231. E.g., in the illustrated example, the mean power of each probe channel 931 at the output from the first OA 275 of the ROF line 232 (FIG. 9B) is about -11.2 dBm, as suggested above, while the load channels 711, 721 carry about 7 dBm each. At the output 241_{N} of the coupler 242 in the OOF line 231 (the relay line output, which may be terminated and not in use), the mean power of each probe channel is greater, i.e. about -5.1 dBm, while the load channels 711, 721 are lower in power, at about 0.5 dBm each (FIG. 9A).

In the illustrated example, the ratio of the optical power in the probe light to the optical power in the load channels 711, 721 is different in the outbound and return optical fiber lines, e.g. the OOF line 231 and the ROF line 232 of FIG. 2. Such operation may be achieved, e.g., using the filter 278, which may have different, e.g. greater, attenuation for the transmitted probe channels than the load channels. In some implementations, the *N*-th OLB path 270N may be configured to block light in some or all of the probe channels from C₁ to C_{N-1} from entering the ROF line 232.

In the example configuration of the OF system 230 described above with reference to FIG. 2, light of the load channels, e.g. 711 and 721, when present at the input to the system, e.g. the OOF line 231, will be coupled into the sensor optical fibers, e.g. 242*ₙ*, with *n* = 1, 2, ... *N,* giving rise to the Rayleigh back-scattered load light directed along the corresponding OLB path, e.g., 270ₙ by the circulator 274. Similar to the backscattered light of the probe channels, the Rayleigh back-scattered load light has intensity noise distributed over the bandwidths of the respective load channels 711, 721. This intensity noise of the back-scattered load light may cause phase and polarization noise on the probe channels through cross-phase modulation (XPM) and cross-polarization modulation (XPolM). The group delay dispersion may cause some of this modulation to be averaged out, since the load light and the optical probe signals travel at different speeds through the ROF line 232. Signal in the probe channels that are spectrally close to the load channels may still be affected. The degradation of the probe channel signals due to the cross-modulation with the noisy load light may be reduced by increasing the load channel bandwidth to be much greater than the probe signal bandwidth *B*_{c}, e.g., to be greater than the probe channel spacing, thus spreading much of the cross-modulation intensity noise to frequencies that are outside of the detection bandwidth used in the optical receiver of the interrogating apparatus. In experiments where the probe signal full-width-half-maximum bandwidth was 80 MHz we have observed no measurable degradation with the 500 to 600 GHz load bandwidth shown in FIGs. 9A and 9B.

In some embodiments of the DOFS system of FIG. 2, the OLB paths 270*ₙ* may be configured to cause light of one or more of the load channels to bypass one or more of the sensor optical fibers 242*ₙ*, and to enter return-path OA(s) 275, possibly via the optical preamplifier(s) 252. This may avoid the XPM and/or XPolM of the probe channel signals in the ROF line 232 by the Raleigh back-scattering induced intensity noise of the load light. In such embodiments, the bandwidth of the load channels that bypass the sensor optical fibers 242*ₙ* may be smaller, e.g. less than the probe channel spacing, thereby reducing requirements to the total OA bandwidth. In some embodiments, the load light spectrum may be broadened to suppress stimulated Brillouin scattering, e.g., by applying phase modulation with a moderate bandwidth (typically between 50 and 1000 MHz). In some implementations, the load channel(s) that stabilize(s) the gain of the OAs of the OOF line 231 may be different from the load channel(s) that stabilize(s) the gain of the OAs in the ROF line 232, and the load channel(s) intended for the ROF line 232 may not be intensity modulated in the OFI 210 to compensate for intensity and wavelength variation in the probe light 531.

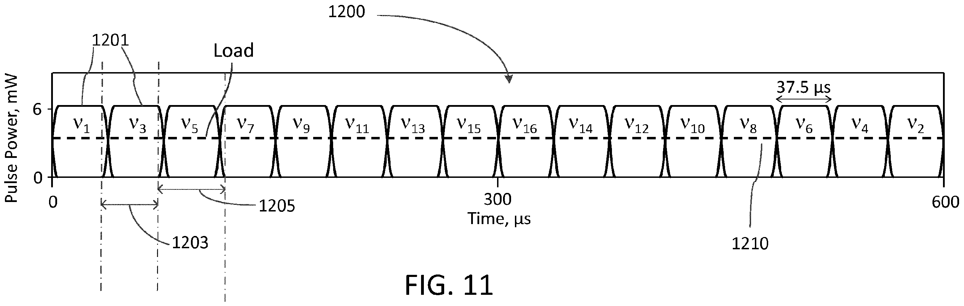

As illustrated in FIG. 11, in some embodiments the load light is separated from the probe pulses in the last OLB path 270*_{N}* with a wavelength-selective drop filter 1102 located upstream of the circulator 274, and rejoined with the back-reflected probe signals by a wavelength-selective add filter 1104, preferably before the input to the optical preamplifier 252. In some embodiments, the load light bypassing the circulator 274 may be suitably attenuated with an optical attenuator 1106.

In some embodiments, the OLB path 270_{N} may be configured to selectively block light of one or more load channels to prevent said light from entering the ROF line 232., e.g. using wavelength filtering somewhere along the OLB path 270_{N} or at the output of the nearest upstream OA 220. The load channel(s) being blocked may include, e.g., those of the load channels that are modulated to stabilize the gain of the OAs 220 of the OOF line 231.

With reference to FIG. 12, in some embodiments an OFI, e.g. the OFI 110, 210, or 500 described above, may be configured to output probe light 1200 comprising a sequence of probe optical pulses 1201 with center wavelengths λ*ₙ* (center frequencies *νₙ*=c/**_**λ*ₙ*) in different non-overlapping wavelength channels (. Start times of the optical pulses 1201 are equally spaced, e.g. by a same time delay 1203, which in this example is somewhat smaller than the duration 1205 of each probe optical pulse 1201. Those of the probe pulses 1201 that are transmitted at consecutive start times temporally overlap at the edges, near start times and end times thereof. This is in contrast with the pulse sequence 700 of FIG. 7, where the duration of each pulse 703 does not exceed the transmission time delay 701 between consecutive starts times of the pulses 703 of the sequence. Here, "consecutive" refers to two pulses from a pulse sequence having consecutive start times. Once the entire set of the *N* wavelength channels is cycled through, the sequence of probe optical pulses 1201 is repeated.

In a preferred embodiment the probe optical pulses 1201 are suitably apodized, with the pulse shape and the transmission time delay 1203 selected to keep the optical power of the probe light 1200 approximately constant during the transmission of the pulse sequence, or at least half of a repeat period. Here, "approximately constant" means that variations of the optical power of the probe light, time-averaged over a window of at least 10 µsec, is within +\- 30%, or preferably within +\- 10%, of a mean value thereof. Avoiding power dips at transitions between consecutive pulses 1201 may simplify managing the gain dynamics of the OAs 220 of the OOF line 231. A pulse apodization time, i.e. the duration of the rising and falling edges of the probe pulse ("on/off transition times") may be relatively small, so as to reduce the overlaps between probe pulses of different wavelengths and thus to lessen the FWM. By way of example, the on/off transition times of a probe pulse may each be less than about 2 µsec, or preferably less than about 0.2 µsec. Very short apodization times may lead to the appearance of undesired side-lobes in the compressed signal at the output of the matched-filter processing. In some implementations, the OFI may be configured to correspondingly apodize the matched-filter impulse response used for the chirp compression, and/or to increase a chirp rate at the start and the end of the pulse, as described above with reference to FIG. 6. These measures may lessen the magnitude of the undesired side-lobes.

In some implementations, the probe optical pulses 1201 of different wavelength channels may be ordered such that the wavelength change between two subsequent pulses 1201 is minimized; this can for instance be achieved by ordering the channel frequencies *ν*ₙ of consecutive pulses 1201 from high to low or from low to high throughout the pulse sequence. Such ordering may reduce OA-induced distortions of the pulse shape for most of the probe pulses as they propagate in the OOF line being interrogated (e.g. OOF line 231), as reducing a wavelength change of input light tends to reduce changes in the steady-state spectral gain profile in the active (rare-earth doped) optical fibers of the OAs 220. Some OA gain instability may however occur when stepping from the end of one such pulse sequence to the start of the next pulse sequence. In some implementations, this may be mitigated, e.g., by adding a short time delay between consecutive ones of the pulses sequences and transmitting load light of a suitable power between the consecutive ones of the sequences, e.g. as described above with reference to FIG. 4A ("idle time" 407). The load light may be transmitted, e.g. in a load channel that is spectrally close to, but still separate from, the wavelength channel of the first probe pulse in the sequence. In another implementation, the probe light transmission may be stepped through, e.g., the odd numbered channels in one direction of wavelength change for a first half of the pulse sequence, followed by the even numbered channels in the opposite direction.

In some implementations corresponding to FIG. 12, load channels might be omitted. In some other embodiments corresponding to FIG. 12, a single load channel may be used, which may or may not be modulated. Using one or more load channels alongside the sequence of overlapping probe optical pulses, such as e.g. the sequence of probe optical pulses 1201 of FIG. 12, may be helpful to suitably load the optical amplifiers in the return optical fiber line, e.g. the OAs 275 of the ROF line 232 of FIG. 2, and possibly to control the wavelength and time dependence of the OA gain of the OF line being interrogated, e.g. OAs 220 of the OOF line 231 of FIG. 2. A potential disadvantage of the overlapping pulse configuration of FIG. 12 is the generation of FWM-induced sidelobes in the optical spectrum of the return light, and consequences thereof. The FWM may be somewhat lessened using non-uniform frequency spacing between the probe channels.

Note that at least some of the features described above with reference to specific examples of DOFS systems can also be used in optical systems that differ in some aspects from the ones described above. Such other DOFS systems include, for instance, various distributed sensing systems that use pulsed or intensity modulated interrogation light to interrogate optical fibers, such as but not limited to Raman DTS systems, distributed Brillouin sensing systems, pulsed OTDR systems, pulsed interferometer interrogation systems, pulsed FBG interrogation systems. E.g., all of the above DOFS systems may be configured to use amplified multi-segment relay optical lines with separate sensor optical fibers coupled to at least some of the relay fiber segments.

Furthermore, at least some of the features described above with reference to specific examples of DOFS systems may be used in long-haul submarine telecom systems. E.g. DAS can be added for submarine telecom cable threat monitoring by dedicating a separate fiber pair for DAS to establish a surveillance system that generates early warnings if a potential threat is detected in the vicinity of the submarine telecom cable. Dedicated submarine DAS sensing cables may also be installed alongside, or piggybacked to electricity power cables, or seabed hydrocarbon carrying pipelines, for, e.g., detection and localization of leaks or electrical faults, and/or for cable or pipeline threat monitoring. The DAS sensing capabilities of such a system can also contribute to the SMART cables initiative where environmental sensing in introduced to submarine telecom systems for oceanographic and climate research objectives. In this respect, DAS can contribute with oceanographic observations on mammals, earthquakes, tsunamis, temperature or strain fluctuations etc.

Various features of the distributed optical fiber sensors described above with reference to specific examples may be used, e.g., inside telecom cables on a dedicated fiber pair or alternatively constitute a dedicated cable system for the sole purpose of sensing.

While this disclosure includes references to illustrative embodiments, this specification is not intended to be construed in a limiting sense, and various modifications of the described embodiments will be evident to those skilled in the art based on the present specification. For example, some embodiments may include more than two load channels with temporally varying load light; e.g. a third load channel may be added spectrally between the first and second load channels to define two separate wavelength ranges for the OFI signal channels. Other embodiments may include only one load channel or no load channels at all. In some embodiments, corresponding optical probe signals of consecutive transmission or repeat periods, which are transmitted in a same wavelength channel, may be offset in central frequencies thereof, e.g. by a frequency in a range from 2 MHz to 2 GHz; e.g. they may be frequency-chirped pulses with somewhat different ranges of frequency chirping. Furthermore, optical couplers may be used instead of circulators 274 to extract back-reflected light from optical fibers in the example OF system described above. A circulator may be used instead of a directional optical coupler in the add-couplers 277. Either multi-stage or single-stage optical amplifiers may be used for the OAs 120, 220, 252, 275. Furthermore, one or more of the OAs 120, 220, 252, 275 may be implemented using Raman amplification in the optical fibers 241, 260 of the OOF and the ROF lines, or using discrete Raman amplifiers where the amplifying fiber is contained within the amplifier unit. In some embodiments, one or more of the OAs 120, 220, 252, 275 may be implemented using semiconductor optical amplifiers (SOAs). Extra amplifiers may be added in certain paths, for instance in the path between the output of a return-path OA 275 and a downstream add-coupler 277. Some of the optical segments may lack a separate sensor optical fiber, with the back-reflected light being sourced for sensing from the relay optical fiber of the segment. In some embodiments, one or more couplers 272 may branch out to multiple sensor fibers, potentially measuring different quantities and/or at different locations, where the backscatter of at least one channel from each sensor fiber is amplified and added into the ROF line 232. In some embodiments some of the couplers 272 may be a drop filter. In some embodiments some of the couplers 272, 270 may be grating-assisted add/drop couplers. Various other modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

An example embodiment described above, e.g. in the summary section and with reference to any one or more of the FIGs. 1-12, provides an apparatus. The apparatus comprises an optical interrogator (e.g. 110, 210, 500) for a distributed fiber optic sensor comprising an optical transmitter (e.g. 112, 212) and an optical receiver (e.g. 214, 620). The optical transmitter is configured to transmit optical probe signals (e.g. 115, 415, 703, 1201) at a series (e.g. 401) of start times (e.g. *tₖ)* and with a repeat period (e.g. 405, 540). The optical transmitter is configured to transmit the optical probe signals in at least 5 non-overlapping wavelength channels (e.g. 117₁ to 117*_{N}*, *N*=5), the optical probe signals of the repeat period having corresponding center wavelengths (e.g. λ₁ to λ*_{N}*, *N*=5), different ones of the optical probe signals of the repeat period being transmitted in different ones of the wavelength channels. The optical receiver (e.g. 214) is configured to receive back scattered light (e.g. 151*ₙ*, 262*ₙ*) from the optical probe signals and to obtain sensing information therefrom. The optical transmitter is further configured to transmit such that, during at least a ¼ of the repeat period (e.g. 405, 540), each transition between transmitting the optical probe signals with consecutive ones of the start times includes switching the one of the center wavelengths being transmitted to a longer one of the center wavelengths and such that, during at least another ¼ of the repeat period, each transition between transmitting the optical probe signals with consecutive ones of the start times includes switching between the one of the center wavelengths being transmitted to a shorter one of the center wavelengths.

In some implementations, the optical probe signals transmitted in one of the repeat periods are frequency shifted from the optical probe signals transmitted in another of the repeat periods by up to 2 GHz.

In any of the above implementations the optical probe signals (e.g. 115, 415, 1201) transmitted at consecutive start times of the temporal series may partially overlap in time. In some of such implementations, the optical interrogator (e.g. 110, 210) is configured for transmission of the optical probe signals so that an optical power of the transmission remains approximately constant during the transmission period.

In some implementations, the optical probe signals (e.g. 115, 415, 703) transmitted at consecutive start times of the temporal series do not overlap in time.

In any of the above implementations, the optical probe signals (e.g. 115, 415, 703) transmitted at consecutive ones of the start times are separated in time by a temporal gap (e.g. 713) less than 10 microseconds.

In any of the above implementations, adjacent ones of the center wavelengths may be spaced by at least 10 GHz.

In any of the above implementations, adjacent ones of the center wavelengths may be spaced by less than ten times the bandwidth of any one of the optical probe signals.

In any of the above implementations, the apparatus may further comprise one or more load light sources (e.g. 213, 810, 820) configured to transmit load light to a same output (e.g. 801) as the optical probe signals, wherein wavelengths of the load light are in an amplification range for rare-earth doped optical fiber amplifiers. Some of such implementations may further comprise a wavelength multiplexer (e.g. 525) for multiplexing the load light and the optical probe signals. In any of such above implementations, the one or more load light sources may be configured to transmit the load light (e.g. 711 and 721) in two wavelength ranges on opposite sides of a wavelength range of the optical probe signals (e.g. 931). In any of such above implementations, the one or more load light sources (e.g. 213, 810, 820) may be configured to temporally vary the load light in power over the transmission period responsive to changes in the center wavelengths. In some of such above implementations, the one or more load light sources (e.g. 213, 810, 820) may be configured to temporally vary an optical power in the two wavelength ranges in opposite directions over at least ¼ of the transmission period (e.g. 403, 710).

Any of the above implementations may comprise a source of load light (e.g. 213) configured to transmit load light in a wavelength range separate from a wavelength range of the optical probe signals, so that an optical power of the load light remains approximately constant over at least half of the transmission period.

Any of the above implementations may further comprise an outward optical fiber line (e.g. 130, 231) comprising a plurality of serially connected optical segments (e.g. 140, 240), at least some of the optical segments comprising an optical amplifier (e.g. 120, 220) and an optical fiber (e.g. 140, 242) coupled to an output of the optical amplifier. Any such implementation may further comprise a return optical fiber line (e.g. 232) connected to selectively transmit, to the optical receiver (e.g. 214), light of the optical probe signals (e.g. 151*ₙ*, 262*ₙ*) scattered back in the optical fibers (e.g. 140*ₙ*, 242*ₙ*), e.g. in corresponding ones of the wavelength channels (e.g. 117*ₙ*; 931*ₙ*). In some of such implementations, the optical interrogator (e.g. 110, 210) may be configured for distributed acoustic sensing along the optical fibers of the outward optical fiber line.

In any of the above implementations, the optical transmitter (e.g. 112, 212) may be configured to transmit at least 8 of the optical probe signals (e.g. 115, 415, 703, 1201) over the transmission period (e.g. 403, 710).

In any of the above implementations, the optical transmitter (e.g. 112, 212) may be configured such that, during one half of the transmission period (e.g. 405, 540), the center wavelength being transmitted changes in a same direction at each transition between the optical probe signals (e.g. 405, 703, 1201) with consecutive ones of the start times.

In any of the above implementations, the optical transmitter (e.g. 112, 212) may be configured so that, over consecutive transmission periods (e.g. consecutive instances of 403, 710), the center wavelength being transmitted changes at each transition between the optical probe signals with consecutive ones of the start times by less than three times the spacing (e.g. Δλ 119) between adjacent ones of the center wavelengths.

A second example embodiment described above, e.g. in the summary section and with reference to any one or more of the FIGs. 1-12, provides an optical interrogator (e.g. 110, 210, 500) for a distributed fiber optic sensor. The optical interrogator comprises an optical transmitter (e.g. 112, 212) and an optical receiver (e.g. 214, 620). The optical transmitter is configured to transmit optical probe signals (e.g. 115, 415, 703, 1201) at a temporal series (e.g. 401) of corresponding start times (e.g. *tₖ)* into an amplified multi-segment optical fiber line over a set of spectrally separate wavelength channels (e.g. 117, 931), such that the optical probe signals transmitted at different start times of the temporal series are transmitted in different ones of the wavelength channels of the set, and such that any two of the optical probe signals transmitted at consecutive ones of the start times in a same repeat period partially overlap in time. The optical received is configured to receive back scattered light from the optical probe signals, and obtain sensing information therefrom.

A third example embodiment described above, e.g. in the summary section and with reference to any one or more of the FIGs. 1-12, provides an apparatus for distributed optical fiber sensing. The apparatus comprises an optical interrogator (e.g. 110, 210, 500) for interrogating an amplified optical fiber line (e.g. 130, 231). The interrogator is configured to transmit optical probe signals (e.g. 115, 415, 703, 1201) at a temporal series (e.g. 401) of corresponding start times (e.g. *tₖ)* over a set of spectrally separate wavelength channels (e.g. 117, 931), such that the optical probe signals transmitted at different start times of the temporal series are transmitted in different ones of the wavelength channels of the set. The optical interrogator is further configured to receive back scattered light from the optical probe signals, and obtain sensing information therefrom.

In some implementations of the second and third embodiments, the optical interrogator (e.g. 110, 210, 500) is configured to repeat the transmission of the optical probe signals in consecutive transmission periods (e.g. 403), so that a center wavelength of the transmission changes in a same direction over each of the consecutive transmission periods. In some of such implementations, the optical interrogator (e.g. 110, 210, 800) is configured to transmit load light into the optical fiber line during a wait time (e.g. 407) between the consecutive transmission periods (e.g. 403), e.g. so as to maintain an optical power input into the optical fiber line approximately constant, the load light being spectrally-separate from the probe optical signals. In some of the above implementations of the third embodiment, the optical probe signals (e.g. 1201) transmitted at consecutive ones of the start times at different ones of the center wavelengths partially overlap in time at edges thereof or temporally spaced by less than 10 µsec.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus, comprising:
an optical interrogator for a distributed fiber optic sensor comprising an optical transmitter and an optical receiver;
wherein the optical transmitter is configured to transmit optical probe signals at a series of start times and with a repeat period, the optical transmitter is configured to transmit the optical probe signals in at least 5 non-overlapping wavelength channels, the signals of the repeat period having corresponding center wavelengths, different ones of the signals of the repeat period being transmitted in different ones of the wavelength channels;
wherein the optical receiver is configured to receive back scattered light from the optical probe signals and to obtain sensing information therefrom; and
wherein the optical transmitter is configured to transmit such that, during at least a ¼ of the repeat period, each transition between transmitting the optical probe signals with consecutive ones of the start times includes switching the one of the center wavelengths being transmitted to a longer one of the center wavelengths and such that, during at least another ¼ of the repeat period, each transition between transmitting the optical probe signals with consecutive ones of the start times includes switching the one of the center wavelengths being transmitted to a shorter one of the center wavelengths.

2. The apparatus of claim 1, wherein the optical probe signals transmitted in one of the repeat periods are frequency shifted from the optical probe signals transmitted in another of the repeat periods by up to 2 GHz.

3. The apparatus of claim 1 or 2, wherein at least eight of the wavelength channels have one of the center wavelengths therein.

4. The apparatus of claim 1, 2 or 3, wherein the optical probe signals transmitted at consecutive start times of the temporal series partially overlap in time.

5. The apparatus of claim 4, wherein the optical transmitter is configured for transmission of the optical probe signals so that an optical power of the transmission remains approximately constant during at least half of the repeat period.

6. The apparatus of claim 1, 2, or 3, wherein the optical probe signals transmitted at consecutive start times of the temporal series do not overlap in time.

7. The apparatus of claim 6, wherein the optical probe signals transmitted at consecutive start times of the temporal series are separated in time by less than 10 microseconds.

8. The apparatus of any one of claims 1 to 7, further comprising one or more load light sources configured to transmit load light to a same output as the optical probe signals, wherein wavelengths of the load light are in an amplification range for rare-earth doped optical fiber amplifiers.

9. The apparatus of claim 8 wherein the one or more load light sources are configured to transmit the load light in two wavelength ranges on opposite sides of a wavelength range of the optical probe signals.

10. The apparatus of claim 8 or 9 wherein the one or more load light sources are configured to temporally vary the load light in power over the repeat period responsive to the switching in the center wavelengths.

11. The apparatus of claim 10 wherein the one or more load light sources are configured to temporally vary an optical power in the two wavelength ranges in opposite directions over at least a part of the repeat period.

12. The apparatus of any one of claims 1 to 11 further comprising:
an outward optical fiber line comprising a plurality of serially connected optical segments, at least some of the optical segments comprising an optical amplifier and an optical fiber coupled to an output of the optical amplifier; and
a return optical fiber line for returning, to the optical receiver, light of the optical probe signals scattered back in the optical fibers in corresponding ones of the wavelength channels.

13. The apparatus of claim 12 wherein the optical interrogator is configured for distributed acoustic sensing along the optical fibers of the outward optical fiber line.

14. The apparatus of any one of claims 1 to 13 wherein the optical transmitter is configured so that, during one half of the repeat period, the center wavelength being transmitted changes in a same direction at each transition between the optical probe signals with consecutive ones of the start times.

15. The apparatus of any one of claims 1 to 14, wherein the optical transmitter is configured such that, over consecutive repeat periods, the center wavelength being transmitted changes at each transition between the optical probe signals with consecutive ones of the start times by less than three times the spacing of the center wavelengths.
